# EUROPEAN PATENT APPLICATION

(11) **EP 4 586 477 A1**
(43) Date of publication of application: **16.07.2025**
(21) Application number: 24222497.0
(22) Date of filing: 20.12.2024
(51) Int. Cl.: H02M 1/00, H02M 3/00, H02M 3/335, H02M 1/08

(54) **SOFT-SWITCH RESONANT CONVERTER AND CONTROL METHOD THEREOF**

(30) Priority: 12.01.2024 CN 202410055288
(71) Applicant: Huawei Digital Power Technologies Co., Ltd., Shenzhen, Guangdong 518043 (CN)
(72) Inventor: HE, Ye, Shenzhen, Guangdong 518043 (CN); WANG, Dazhi, Shenzhen, Guangdong 518043 (CN)
(74) Representative: Maiwald GmbH

(57) **Abstract**

This application provides a soft-switch resonant converter and a control method thereof. The resonant converter includes a switching device and a control circuit. The control circuit includes a current detection module and a drive module. The current detection module is connected to the switching device; the current detection module is configured to obtain a direction of a current flowing through the switching device; and the drive module is configured to: when the direction of the current flowing through the switching device is a first direction and a turn-on period of the switching device arrives, control the switching device to be turned on. The first direction is a reverse direction of the current flowing through the switching device when the switching device is turned on. According to this application, it can be ensured that the switching device of the resonant converter implements soft switching, so that reliability and applicability are high.

## Description

### TECHNICAL FIELD

This application relates to the field of switch control technologies, and in particular, to a soft-switch resonant converter and a control method thereof.

### BACKGROUND

A resonant converter uses a high switching frequency in an operating process. This increases power density, but also increases a switching loss. The resonant converter implements soft switching by driving a switching device, so that a switching loss can be effectively reduced and high-frequency operating is allowed. Soft switching means that before the switching device is turned on, a voltage between two ends of the switching device is first reduced to a voltage close to zero through a resonant circuit, and then the switching device is driven to be turned on. There is no overlap between a voltage and a current of the switching device in a turn-on process.

Generally, the resonant converter may predict, based on the detected voltage between the two ends of the switching device, a moment at which the voltage between the two ends of the switching device is equal to 0, and control, based on the predicted moment, the switching device to be turned on, to implement soft switching. However, because there is a deviation between an actual voltage and a predicted voltage of the switching device in an operating process, the resonant converter controls, based on the predicted moment, the switching device to be turned on. Consequently, implementation of soft switching of the switching device cannot be ensured, and applicability is poor.

### SUMMARY

This application provides a soft-switch resonant converter and a control method thereof. When the resonant converter controls a switching device to be turned on, it can be ensured that the switching device implements soft switching, so that reliability and applicability are high.

According to a first aspect, this application provides a soft-switch resonant converter. The resonant converter includes a switching device and a control circuit. The control circuit includes a current detection module and a drive module. The current detection module is connected to the switching device; the current detection module is configured to obtain a direction of a current flowing through the switching device; and the drive module is configured to: when the direction of the current flowing through the switching device is a first direction and a turn-on period of the switching device arrives, control the switching device to be turned on. The first direction is a reverse direction of the current flowing through the switching device when the switching device is turned on. In this application, the resonant converter may obtain, through the current detection module in the control circuit, the direction of the current flowing through the switching device. It may be understood that, when the direction of the current flowing through the switching device is the first direction, it indicates that the switching device meets an implementation condition of soft switching. In this case, when the turn-on period of the switching device arrives, the resonant converter controls, through the drive module of the control circuit, the switching device to be turned on, to implement soft switching of the switching device. In this embodiment of this application, the resonant converter detects, through the current detection module, the direction of the current flowing through the switching device, and can determine, before the switching device is turned on, whether the switching device meets an implementation condition of soft switching. This ensures accurate implementation of soft switching of the switching device, and does not require additional software calculation, so that reliability and applicability are high.

With reference to the first aspect, in a first possible implementation, the control circuit further includes a first OR gate, a first input of the first OR gate is connected to an output of the current detection module, a second input of the first OR gate is configured to receive an enable signal, and an output of the first OR gate is connected to the drive module. The current detection module is configured to: when the direction of the current flowing through the switching device is the first direction, output a high level to the first OR gate. The first OR gate is configured to output a high level to the drive module when obtaining the high level output by the current detection module or receiving the enable signal. The drive module is further configured to: when the high level output by the first OR gate is obtained and the turn-on period of the switching device arrives, control the switching device to be turned on. In this application, the resonant converter is provided with the first OR gate between the current detection module and the drive module, and the second input of the first OR gate may output a high level to the drive module when receiving the enable signal, so that when the drive module receives the high level and the turn-on period of the switching device arrives, the drive module controls the switching device to be turned on. This avoids a problem that the switching device cannot be turned on when the current flowing through the switching device is excessively small.

With reference to the first aspect, in a second possible implementation, the control circuit further includes a second OR gate, a first input of the second OR gate is connected to an output of the current detection module, a second input of the second OR gate is connected to an output of the drive module, and an output of the second OR gate is connected to an input of the drive module. The current detection module is configured to: when the direction of the current flowing through the switching device is the first direction, output a high level to the second OR gate. The second OR gate is configured to: when the high level output to the second OR gate is received or the output of the drive module outputs a high level, output a high level to the drive module. The drive module is further configured to: when the high level output by the second OR gate is obtained and the turn-on period of the switching device arrives, control the switching device to be turned on. In this application, the resonant converter is provided with the second OR gate between the current detection module and the drive module, and receives the high level from the output of the drive module through the second input of the second OR gate. After the drive module controls the switching device to be turned on, the second OR gate outputs a high level to the drive module based on the high level of the second input end, so that the drive module performs self-locking after controlling the switching device to perform soft switching, to continue to control the switching device to be turned on within the turn-on period. This ensures stable operation of the switching device.

With reference to any one of the first possible implementation of the first aspect and the second possible implementation of the first aspect, in a third possible implementation, the resonant converter further includes a resonant circuit, the switching device is connected to a direct current power supply through a first branch, the switching device is connected to the resonant circuit through a second branch, and the current detection module is connected in series to the first branch or the second branch. The current detection module is specifically configured to obtain a direction of a current flowing through the first branch or the second branch, to obtain the direction of the current flowing through the switching device. In this application, the current detection module is connected in series to the first branch or the second branch, so that the resonant converter can detect the direction of the current flowing through the first branch or the second branch, and further determine the direction of the current flowing through the switching device.

With reference to any one of the first possible implementation of the first aspect to the third possible implementation of the first aspect, in a fourth possible implementation, the resonant converter includes the resonant circuit, two control circuits, and two switching devices, the two switching devices are connected in series and then connected in parallel to two ends of the direct current power supply, and the resonant circuit is connected to a first connection point at which the two switching devices are connected in series. The two switching devices are in a one-to-one correspondence with the two control circuits, and the control circuit is connected in series between the corresponding switching device and the direct current power supply. Alternatively, the control circuit is connected in series between the corresponding switching device and the first connection point. Current detection modules in the two control circuits are separately configured to obtain a direction of a current flowing through the corresponding switching device, and drive modules in the two control circuits are separately configured to: when the direction of the current flowing through the corresponding switching device is the first direction and a turn-on period of the corresponding switching device arrives, control the corresponding switching device to be turned on, where the first direction is a reverse direction of the current flowing through the corresponding switching device when the corresponding switching device is turned on. In this application, the control circuit is connected in series to the corresponding switching device, so that the resonant converter can detect, through the current detection module in the control circuit, the direction of the current flowing through the corresponding switching device. It may be understood that, when the direction of the current flowing through the corresponding switching device is the first direction, the corresponding switching device meets an implementation condition of soft switching. Further, when the turn-on period of the corresponding switching device arrives, the resonant converter may control the corresponding switching device to be turned on, to implement soft switching. The resonant converter in this embodiment of this application can implement soft switching of two switching devices connected in series.

With reference to any one of the first possible implementation of the first aspect to the third possible implementation of the first aspect, in a fifth possible implementation, the resonant converter includes the resonant circuit, a plurality of switching devices, and a plurality of control circuits, any two of the plurality of switching devices are connected in series and then connected in parallel to two ends of the direct current power supply, one of the two switching devices is connected to a first end of the direct current power supply, the other of the two switching devices is connected to a second end of the direct current power supply, and the resonant circuit is connected to a first connection point at which the two switching devices are connected in series. The plurality of control circuits are in a one-to-one correspondence with a plurality of switching devices connected to the first end of the direct current power supply, and each of the plurality of control circuits is connected in series between the first end of the direct current power supply and the first connection point. Alternatively, the plurality of control circuits are in a one-to-one correspondence with a plurality of switching devices connected to the second end of the direct current power supply, and each of the plurality of control circuits is connected in series between the second end of the direct current power supply and the first connection point. A current detection module in each control circuit is configured to obtain a direction of a current flowing through the corresponding switching device, and a drive module in each control circuit is configured to: when the direction of the current flowing through the corresponding switching device is the first direction and a turn-on period of the corresponding switching device arrives, control the corresponding switching device to be turned on, where the first direction is a reverse direction of the current flowing through the corresponding switching device when the corresponding switching device is turned on. In this application, the control circuit is connected in series to the corresponding switching device, so that the resonant converter can detect, through the current detection module in the control circuit, the direction of the current flowing through the corresponding switching device. It may be understood that, when the direction of the current flowing through the corresponding switching device is the first direction, the corresponding switching device meets an implementation condition of soft switching. Further, when the turn-on period of the corresponding switching device arrives, the resonant converter may control the corresponding switching device to be turned on, to implement soft switching. In the resonant converter in this embodiment of this application, soft switching of the plurality of switching devices may be separately implemented through the plurality of control circuits.

With reference to the fourth possible implementation or the fifth possible implementation of the first aspect, in a sixth possible implementation, the switching device is connected to the direct current power supply through the first branch, and the switching device is connected to the resonant circuit through the second branch. The current detection module includes a primary coil, a secondary coil, and a direction determining unit, the primary coil is connected in series to the first branch or the second branch, the secondary coil is coupled to the primary coil, and the direction determining unit is electrically connected to the secondary coil. The secondary coil is configured to generate an induced current based on a current flowing through the primary coil. The direction determining unit is configured to determine a direction of the induced current, to obtain the direction of the current flowing through the first branch or the second branch. In this application, the primary coil is connected in series to the first branch or the second branch, so that the current detection module can couple, to the secondary coil, the current flowing through the first branch or the second branch, and determine, through the direction determining unit based on the direction of the induced current generated by the secondary coil, the direction of the current flowing through the first branch or the second branch. Because the primary coil is coupled to the secondary coil, different parts of the circuit can be effectively isolated, thereby implementing protection and security functions.

With reference to the sixth possible implementation of the first aspect, in a seventh possible implementation, the direction determining unit includes a first resistor, a second resistor, and a comparator. The first resistor is connected in parallel to the secondary coil, a first end of the first resistor is connected to a first input of the comparator, a second end of the first resistor is connected to one end of the second resistor, the other end of the second resistor is configured to receive a bias voltage, a second input of the comparator is configured to receive a reference voltage, and an output of the comparator is connected to the drive module. The comparator is configured to: when a voltage at a target input is greater than the reference voltage, output a high level to the drive module, where the target input is the first input of the comparator. In this application, when directions of the induced currents generated by the secondary coil of the current detection module flowing through the first resistor are different, in other words, when directions of the currents flowing through the first branch or the second branch are different, voltages at the first input of the comparator are different. In this case, the current detection module may determine, based on a result of comparison between the voltage at the first input of the comparator and the reference voltage, the direction of the current flowing through the first branch or the second branch. In addition, the current detection module enables, based on the bias voltage, the voltage at the first input of the comparator to be greater than 0. This ensures accuracy of the result of comparison between the voltage at the first input of the comparator and the reference voltage.

With reference to any one of the first possible implementation of the first aspect to the third possible implementation of the first aspect, in an eighth possible implementation, the resonant converter includes the resonant circuit, a plurality of switching devices, and one control circuit, any two of the plurality of switching devices are connected in series and then connected in parallel to two ends of the direct current power supply, and the resonant circuit is connected to a first connection point at which the two switching devices are connected in series. The control circuit is connected in series between the first connection point and the resonant circuit, a current detection module in the control circuit is configured to obtain a direction of a current flowing through one of the two switching devices, and a drive module in the control circuit is configured to: when the direction of the current flowing through the one switching device is the first direction and a turn-on period of the one switching device arrives, control the one switching device to be turned on, where the first direction is a reverse direction of the current flowing through the one switching device when the one switching device is turned on. In this application, the resonant converter connects the control circuit in series between the resonant circuit and the first connection point, and may detect, through the current detection module in the one control circuit, directions of currents of different switching devices connected to the first connection point. It may be understood that, when the direction of the current flowing through the one switching device is the first direction, the one switching device meets an implementation condition of soft switching. Further, when the turn-on period of the one switching device arrives, the resonant converter may control, through the drive module, the one switching device to be turned on, to implement soft switching. In the resonant converter in this embodiment of this application, soft switching of the plurality of switching devices is implemented through the one control circuit. This can reduce costs.

With reference to the eighth possible implementation of the first aspect, in a ninth possible implementation, the switching device is connected to the resonant circuit through the second branch. The current detection module includes a primary coil, a secondary coil, and a direction determining unit, the primary coil is connected in series to the second branch, the secondary coil is coupled to the primary coil, and the direction determining unit is electrically connected to the secondary coil. The secondary coil is configured to generate an induced current based on a current flowing through the primary coil. The direction determining unit is configured to determine a direction of the induced current, to obtain the direction of the current flowing through the second branch. In this application, the primary coil is connected in series to the second branch, so that the current detection module can couple, to the secondary coil, the current flowing through the second branch, and determine, through the direction determining unit based on the direction of the induced current generated by the secondary coil, the direction of the current flowing through the second branch. Because the primary coil is coupled to the secondary coil, different parts of the circuit can be effectively isolated, thereby implementing protection and security functions.

With reference to the ninth possible implementation of the second aspect, in a tenth possible implementation, the direction determining unit includes a rectifier and a comparator, an input of the rectifier is connected to the secondary coil, an output of the rectifier is connected to a first input of the comparator, a second input of the comparator is configured to receive a reference voltage, and an output of the comparator is connected to the drive module. The comparator is configured to: when a voltage at a target input is greater than the reference voltage, output a high level to the drive module, where the target input is the first input of the comparator. In this application, the current detection module connects the input of the rectifier and the secondary coil, so that the induced current can flow through the rectifier, voltages of different magnitudes are generated at the output of the rectifier, and voltages of different magnitudes are generated at the first input of the comparator. The current detection module may determine, by comparing a magnitude of the voltage at the first input end with a magnitude of the reference voltage, the direction of the current flowing through the second branch.

According to a second aspect, this application further provides a resonant converter control method. The control method is applied to a control circuit. The control circuit includes a current detection module and a drive module, and the current detection module is configured to connect to a switching device. The control method includes: The current detection module obtains a direction of a current flowing through the switching device; and when the direction of the current flowing through the switching device is a first direction and a turn-on period of the switching device arrives, the drive module controls the switching device to be turned on, where the first direction is a reverse direction of the current flowing through the switching device when the switching device is turned on.

With reference to the second aspect, in a first possible implementation, the control circuit further includes a first OR gate, a first input of the first OR gate is connected to an output of the current detection module, a second input of the first OR gate is configured to receive an enable signal, and an output of the first OR gate is connected to the drive module. The control method further includes: When the direction of the current flowing through the switching device is the first direction, the current detection module outputs a high level to the first OR gate; and the first OR gate outputs a high level to the drive module when obtaining the high level output by the current detection module or receiving the enable signal. That the drive module controls, when the direction of the current flowing through the switching device is a first direction and a turn-on period of the switching device arrives, the switching device to be turned on includes: When the high level output by the first OR gate is obtained and the turn-on period of the switching device arrives, the drive module controls the switching device to be turned on.

With reference to the second aspect, in a second possible implementation, the control circuit further includes a second OR gate, a first input of the second OR gate is connected to an output of the current detection module, a second input of the second OR gate is connected to an output of the drive module, and an output of the second OR gate is connected to an input of the drive module. The control method further includes: When the direction of the current flowing through the switching device is the first direction, the current detection module outputs a high level to the second OR gate; and when the high level output to the second OR gate is received or the output of the drive module outputs a high level, the second OR gate outputs a high level to the drive module. That the drive module controls, when the direction of the current flowing through the switching device is a first direction and a turn-on period of the switching device arrives, the switching device to be turned on includes: When the high level output by the second OR gate is obtained and the turn-on period of the switching device arrives, the drive module controls the switching device to be turned on.

With reference to any one of the first possible implementation of the second aspect and the second possible implementation of the second aspect, in a third possible implementation, the resonant converter further includes a resonant circuit, the switching device is connected to a direct current power supply through a first branch, the switching device is connected to the resonant circuit through a second branch, and the current detection module is connected in series to the first branch or the second branch. The control method further includes: The current detection module obtains a direction of a current flowing through the first branch or the second branch, to obtain the direction of the current flowing through the switching device.

With reference to any one of the first possible implementation of the second aspect to the third possible implementation of the second aspect, in a fourth possible implementation, the resonant converter includes the resonant circuit, two control circuits, and two switching devices, the two switching devices are connected in series and then connected in parallel to two ends of the direct current power supply, and the resonant circuit is connected to a first connection point at which the two switching devices are connected in series. The two switching devices are in a one-to-one correspondence with the two control circuits, and the control circuit is connected in series between the corresponding switching device and the direct current power supply. Alternatively, the control circuit is connected in series between the corresponding switching device and the first connection point. The control method further includes: Current detection modules in the two control circuits separately obtain a direction of a current flowing through the corresponding switching device; and when the direction of the current flowing through the corresponding switching device is the first direction and a turn-on period of the corresponding switching device arrives, drive modules in the two control circuits separately control the corresponding switching device to be turned on, where the first direction is a reverse direction of the current flowing through the corresponding switching device when the corresponding switching device is turned on.

With reference to any one of the first possible implementation of the second aspect to the third possible implementation of the second aspect, in a fifth possible implementation, the resonant converter includes the resonant circuit, a plurality of switching devices, and a plurality of control circuits, any two of the plurality of switching devices are connected in series and then connected in parallel to two ends of the direct current power supply, one of the two switching devices is connected to a first end of the direct current power supply, the other of the two switching devices is connected to a second end of the direct current power supply, and the resonant circuit is connected to a first connection point at which the two switching devices are connected in series. The plurality of control circuits are in a one-to-one correspondence with a plurality of switching devices connected to the first end of the direct current power supply, and each of the plurality of control circuits is connected in series between the first end of the direct current power supply and the first connection point. Alternatively, the plurality of control circuits are in a one-to-one correspondence with a plurality of switching devices connected to the second end of the direct current power supply, and each of the plurality of control circuits is connected in series between the second end of the direct current power supply and the first connection point. The control method further includes: The current detection module in each control circuit obtains a direction of a current flowing through the corresponding switching device; and when the direction of the current flowing through the corresponding switching device is the first direction and a turn-on period of the corresponding switching device arrives, the drive module in each control circuit controls the corresponding switching device to be turned on, where the first direction is a reverse direction of the current flowing through the corresponding switching device when the corresponding switching device is turned on.

With reference to the fourth possible implementation or the fifth possible implementation of the second aspect, in a sixth possible implementation, the switching device is connected to the direct current power supply through the first branch, and the switching device is connected to the resonant circuit through the second branch. The current detection module includes a primary coil, a secondary coil, and a direction determining unit, the primary coil is connected in series to the first branch or the second branch, the secondary coil is coupled to the primary coil, and the direction determining unit is electrically connected to the secondary coil. The control method further includes: The secondary coil generates an induced current based on a current flowing through the primary coil; and the direction determining unit determines a direction of the induced current, to obtain the direction of the current flowing through the first branch or the second branch.

With reference to the sixth possible implementation of the second aspect, in a seventh possible implementation, the direction determining unit includes a first resistor, a second resistor, and a comparator. The first resistor is connected in parallel to the secondary coil, a first end of the first resistor is connected to a first input of the comparator, a second end of the first resistor is connected to one end of the second resistor, the other end of the second resistor is configured to receive a bias voltage, a second input of the comparator is configured to receive a reference voltage, and an output of the comparator is connected to the drive module. The control method further includes: The comparator outputs a high level to the drive module when a voltage at a target input is greater than the reference voltage, where the target input is the first input of the comparator.

With reference to any one of the first possible implementation of the second aspect to the third possible implementation of the second aspect, in an eighth possible implementation, the resonant converter includes the resonant circuit, a plurality of switching devices, and one control circuit, any two of the plurality of switching devices are connected in series and then connected in parallel to two ends of the direct current power supply, and the resonant circuit is connected to a first connection point at which the two switching devices are connected in series. The control circuit is connected in series between the first connection point and the resonant circuit. The control method further includes: The current detection module in the control circuit obtains a direction of a current flowing through one of the two switching devices; and when the direction of the current flowing through the one switching device is the first direction and a turn-on period of the one switching device arrives, the drive module in the control circuit controls the one switching device to be turned on, where the first direction is a reverse direction of the current flowing through the one switching device when the one switching device is turned on.

With reference to the eighth possible implementation of the second aspect, in a ninth possible implementation, the switching device is connected to the resonant circuit through the second branch. The current detection module includes a primary coil, a secondary coil, and a direction determining unit, the primary coil is connected in series to the second branch, the secondary coil is coupled to the primary coil, and the direction determining unit is electrically connected to the secondary coil. The control method further includes: The secondary coil generates an induced current based on a current flowing through the primary coil; and the direction determining unit determines a direction of the induced current, to obtain the direction of the current flowing through the second branch.

With reference to the ninth possible implementation of the first aspect, in a tenth possible implementation, the direction determining unit includes a rectifier and a comparator, an input of the rectifier is connected to the secondary coil, an output of the rectifier is connected to a first input of the comparator, a second input of the comparator is configured to receive a reference voltage, and an output of the comparator is connected to the drive module. The control method further includes: The comparator outputs a high level to the drive module when a voltage at a target input is greater than the reference voltage, where the target input is the first input of the comparator.

With reference to any one of the first possible implementation of the second aspect to the tenth possible implementation of the second aspect, in an eleventh possible implementation, the control method further includes: When the turn-off period of the switching device arrives, the drive module controls the switching device to be turned off.

According to a third aspect, this application further provides a control chip. The control chip includes a main control module and the control circuit in the resonant converter according to the first aspect, and the main control module is connected to the control circuit. The main control module is configured to input a drive control signal of a switching device to the control circuit, so that when a direction of a current flowing through the switching device is a first direction and a turn-on period of the switching device arrives, the control circuit controls, based on the drive control signal of the switching device, the switching device to be turned on.

It should be understood that mutual reference may be made to implementations and beneficial effects of the foregoing aspects of this application.

### BRIEF DESCRIPTION OF DRAWINGS

FIG. 1 is a diagram of a structure of a half-bridge resonant converter according to an embodiment of this application;
FIG. 2 is a diagram of a structure of a full-bridge resonant converter according to an embodiment of this application;
FIG. 3 is a diagram of a structure of a three-phase resonant converter according to an embodiment of this application;
FIG. 4 is a diagram of an operating principle of a switching device according to an embodiment of this application;
FIG. 5 is a diagram of a structure of a control circuit according to an embodiment of this application;
FIG. 6 is a diagram of another structure of a control circuit according to an embodiment of this application;
FIG. 7 is a diagram of still another structure of a control circuit according to an embodiment of this application;
FIG. 8 is a diagram of a structure of a current detection module according to an embodiment of this application;
FIG. 9 is a diagram of another structure of a current detection module according to an embodiment of this application;
FIG. 10 is a diagram of still another structure of a current detection module according to an embodiment of this application;
FIG. 11 is a diagram of yet another structure of a control circuit according to an embodiment of this application;
FIG. 12 is a diagram of still yet another structure of a control circuit according to an embodiment of this application;
FIG. 13 is a diagram of a further structure of a control circuit according to an embodiment of this application; and
FIG. 14 is a schematic flowchart of a resonant converter control method according to this application.

### DESCRIPTION OF EMBODIMENTS

A resonant converter provided in embodiments of this application includes a switching device and a control circuit of the switching device (for ease of description, the control circuit of the switching device is referred to as a control circuit for short in the following content). The resonant converter may be understood as a power converter having a resonant circuit, for example, an energy storage power converter or a direct current-direct current (Direct current-Direct current converter, DC-DC) converter. Specifically, based on different switch circuits formed by a plurality of switching devices in the resonant converter, the resonant converter provided in embodiments of this application may be a half-bridge resonant converter, a full-bridge resonant converter, a three-phase resonant converter, or the like. For ease of understanding, an example in which the resonant converter is a half-bridge resonant converter is used for description in the following content.

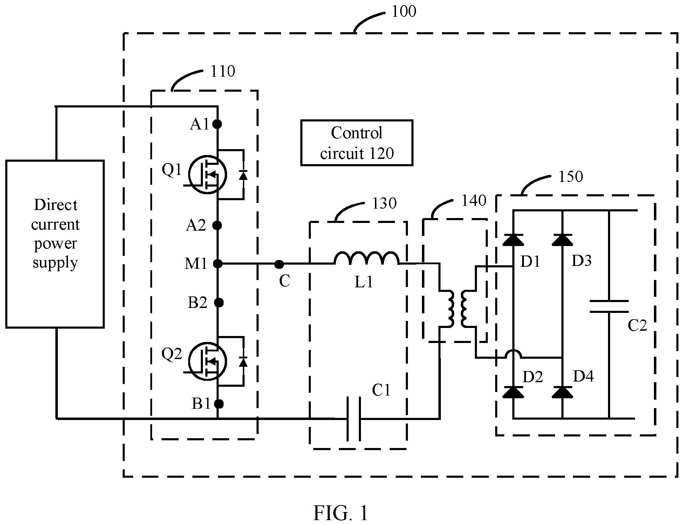

In some feasible implementations, FIG. 1 is a diagram of a structure of a half-bridge resonant converter according to an embodiment of this application. An input of the half-bridge resonant converter 100 shown in FIG. 1 is connected to a direct current power supply, and an output of the half-bridge resonant converter 100 is connected to a load. The direct current power supply may output a fixed direct current to the half-bridge resonant converter 100. The half-bridge resonant converter 100 converts the input fixed direct current into a direct current with a different output characteristic, and provides the direct current for the load for use. The half-bridge resonant converter 100 may adjust an output voltage by controlling a switching frequency of a switch circuit 110, to adjust an output characteristic of a direct current. It can be learned that, after power conversion performed by the half-bridge resonant converter 100, the fixed direct current provided by the direct current power supply may be provided for loads having different power requirements for use. The direct current power supply may be a photovoltaic array, a wind power generation direct current source, an energy storage battery, or the like. The load may be a power-consuming device, for example, a communication base station, a household device, a new energy device, or an energy storage device. Examples are not enumerated one by one herein in this application.

The half-bridge resonant converter 100 includes the switch circuit 110, a control circuit 120, a resonant circuit 130, a transformer circuit 140, and a rectifier circuit 150. One end of the switch circuit 110 is connected to the direct current power supply, and may receive a direct current input by the direct current power supply. The switch circuit 110 is further connected to the control circuit 120. The control circuit 120 may control the switching frequency of the switch circuit 110, so that the switch circuit 110 converts the direct current input by the direct current power supply into a square wave. Specifically, the switch circuit 110 includes a switching device Q1 and a switching device Q2 that are connected in series to a first connection point M1. The switch circuit 110 including the switching device Q1 and the switching device Q2 may also be referred to as a half-bridge switch circuit. It may be understood that the control circuit 120 may separately control, based on a drive control signal, the switching device Q1 and the switching device Q2 to be turned on or off, to control the switching frequency of the switch circuit 110, so that the switch circuit 110 outputs square waves with different frequency characteristics.

The other end of the switch circuit 110 is connected to the resonant circuit 130. The square wave generated by the switch circuit 110 is input to the resonant circuit 130, and the resonant circuit 130 eliminates a harmonic of the square wave and outputs a sine wave of a fundamental frequency. The resonant circuit 130 is connected to the transformer circuit 140. The transformer circuit 140 boosts or bucks the sine wave output by the resonant circuit 130, and rectifies, through the rectifier circuit 150, a boosted or bucked sine wave, to convert the boosted or bucked sine wave into a stable direct current and output the stable direct current to the load.

It may be understood that a switch circuit of a full-bridge resonant converter is a full-bridge switch circuit, and usually includes a plurality of switching devices. When the control circuit provided in this embodiment of this application is used in the full-bridge resonant converter, similarly, the switching devices in the full-bridge switch circuit may be controlled to be turned on or off. It may be understood that a switch circuit of a three-phase resonant converter is a three-phase switch circuit, and usually includes a plurality of switching devices. When the control circuit provided in this embodiment of this application is used in the three-phase resonant converter, similarly, the switching devices in the three-phase switch circuit may be controlled to be turned on or off.

The foregoing is merely examples of different application scenarios of the resonant converter provided in this application, but is not exhaustive. The application scenario is not limited in this application.

For a specific principle of controlling the switching device by the control circuit in the resonant converter provided in this embodiment of this application and specific implementations of the control circuit in the resonant converter used in the foregoing different application scenarios, refer to subsequent descriptions. Details are not described herein.

It should be noted that, it can be learned from the foregoing content that the resonant converter may perform power conversion on a direct current, to obtain a direct current with a different output characteristic. When the resonant converter controls the switching device to operate at a high switching frequency, higher conversion efficiency and higher power density can be achieved. The switching frequency at which the switching device operates may be understood as a quantity of times for which the switching device is turned from off to on or a quantity of times for which the switching device is turned from on to off in a unit time length. In a process in which the switching device is turned from off to on, a voltage and a current of the switching device change sharply, and a changed voltage and current overlap. Consequently, a power loss is generated, in other words, the switching device has a turn-on loss. As the switching frequency of the switching device increases, the turn-on loss of the switching device also increases significantly. To reduce the turn-on loss of the switching device while improving conversion efficiency and power density, the resonant converter may control the switching device to implement soft switching. Soft switching of the switching device means that in the process in which the switching device is turned from off to on, the voltage and the current of the switching device do not overlap. Therefore, no power loss is generated, and the turn-on loss can be reduced. It can be learned that, to implement soft switching, the voltage of the switching device may be reduced to 0 before the switching device is turned on, so that the voltage and the current do not overlap when the switching device is turned on, and the turn-on loss can be reduced.

In some feasible implementations, usually, the resonant converter may detect a voltage between two ends of the switching device, and generate a resonant voltage wave with a sinusoidal characteristic based on a change of a terminal voltage of the switching device. Further, the resonant converter obtains, through software calculation based on the resonant voltage wave, a time point at which the terminal voltage of the switching device drops to a corresponding voltage and a time point at which the terminal voltage of the switching device rises to a low comparison voltage, to estimate in advance a time point at which the terminal voltage of the switching device rises to a high comparison voltage, and further obtains, through prediction, a zero-crossing point of the resonant voltage, namely, a moment at which the terminal voltage is the smallest. The resonant converter controls, based on the predicted moment, the switching device to be turned on, to implement soft switching.

However, as the switching frequency of the switching device continuously increases, when the resonant converter predicts, based on the resonant voltage wave, the moment at which the terminal voltage of the switching device is the smallest, a calculation amount is excessively large. Consequently, a delay of controlling the switching device to respond is increased, and soft switching cannot be accurately implemented. In addition, a change of the terminal voltage of the switching device in an actual operating process may be inconsistent with a predicted change of the terminal voltage. In this case, if the resonant converter controls, based on the predicted moment, the switching device to be turned on, soft switching may not necessarily be implemented. It can be learned that a conventional resonant converter has low reliability and poor applicability in controlling a switching device to implement soft switching.

In view of the foregoing technical problem, an embodiment of this application provides a soft-switch resonant converter, to ensure soft switching of a switching device while implementing high-frequency operating of the switching device, so that reliability and applicability are high.

In some feasible implementations, refer to FIG. 1 again. The resonant converter provided in this embodiment of this application may be the half-bridge resonant converter 100. Specifically, the switch circuit 110 in the half-bridge resonant converter 100 shown in FIG. 1 includes the switching device Q1 and the switching device Q2 that are connected in series to the first connection point M1, and the resonant circuit 130 is connected to the first connection point M1. The control circuit 120 may include a first control circuit and a second control circuit. The first control circuit may be connected in series to a point A1 or a point A2 shown in FIG. 1. The first control circuit may detect a direction of a current flowing through the switching device Q1, to determine whether the switching device Q1 meets an implementation condition of soft switching. In addition, when the switching device Q1 meets the implementation condition of soft switching, the first control circuit controls, based on a drive control signal of the switching device Q1 when a turn-on period of the switching device Q1 arrives, the switching device Q1 to implement soft switching. Similarly, the second control circuit may be connected in series to a point B 1 or a point B2 shown in FIG. 1. The second control circuit may detect a direction of a current flowing through the switching device Q2, to determine whether the switching device Q2 meets the implementation condition of soft switching. In addition, when the switching device Q2 meets the implementation condition of soft switching, the second control circuit controls, based on a drive control signal of the switching device Q2 when a turn-on period of the switching device Q2 arrives, the switching device Q2 to implement soft switching.

In some feasible implementations, the control circuit 120 includes a third control circuit, and the third control circuit may be disposed at a point C shown in FIG. 1. The third control circuit may detect a direction of a current flowing through the resonant circuit 130, to obtain the directions of the current flowing through the switching device Q1 and the current flowing through the switching device Q2, and further determine whether the switching device Q1 and the switching device Q2 meet the implementation condition of soft switching. In addition, when the switching device Q1 meets the implementation condition of soft switching, the third control circuit controls, based on the drive control signal of the switching device Q1 when the turn-on period of the switching device Q1 arrives, the switching device Q1 to implement soft switching. In addition, when the switching device Q2 meets the implementation condition of soft switching, the third control circuit controls, based on the drive control signal of the switching device Q2 when the turn-on period of the switching device Q2 arrives, the switching device Q2 to implement soft switching.

It may be understood that, compared with disposing the first control circuit at the point A1 or the point A2 and disposing the second control circuit at the point B 1 or the point B2, disposing the third control circuit at the point C in the half-bridge resonant converter 100 can reduce one control circuit, thereby reducing costs.

In some feasible implementations, the resonant circuit 130 includes a resonant inductor L1 and a resonant capacitor C1 that are connected in series. The rectifier circuit includes a diode D1 and a diode D2 that are connected in series, a diode D3 and a diode D4 that are connected in series, and a rectifier capacitor C2. For a specific connection manner, refer to FIG. 1. It should be noted that specific implementations of the resonant circuit 130 and the rectifier circuit 150 may be adjusted based on an actual application scenario. This is not limited in embodiments of this application.

In general, the resonant converter provided in embodiments of this application may be the half-bridge resonant converter 100 shown in FIG. 1. When the half-bridge resonant converter 100 controls the switching device Q1 or the switching device Q2 to be turned on, soft switching of the switching device Q1 or the switching device Q2 can be accurately implemented, a turn-on loss of the half-bridge resonant converter 100 can be reduced, and reliability is high.

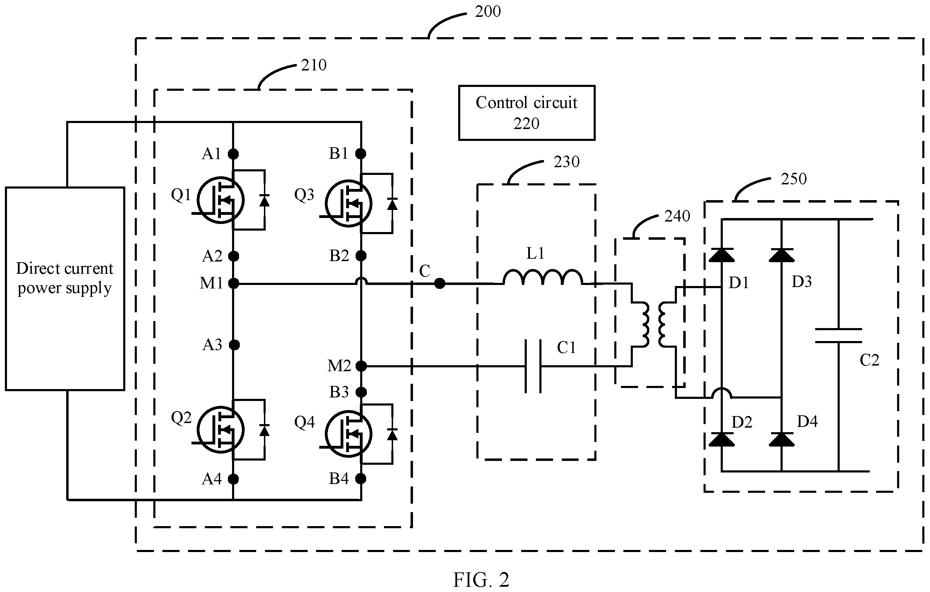

In some feasible implementations, FIG. 2 is a diagram of a structure of a full-bridge resonant converter according to an embodiment of this application. An input of the full-bridge resonant converter 200 shown in FIG. 2 is connected to a direct current power supply, and an output of the full-bridge resonant converter 200 is connected to a load. The full-bridge resonant converter 200 includes a switch circuit 210, a control circuit 220, a resonant circuit 230, a transformer circuit 240, and a rectifier circuit 250.

It should be noted that, for functions and effects of the circuits in the full-bridge resonant converter 200, refer to the specific implementation of the half-bridge resonant converter 100 in FIG. 1. Details are not described herein again in this embodiment of this application.

In some feasible implementations, the switch circuit 210 includes a switching device Q1 and a switching device Q2 that are connected in series to a first connection point M1, and a switching device Q3 and a switching device Q4 that are connected in series to a first connection point M2. One end of the resonant circuit 230 is connected to the first connection point M1, and the other end of the resonant circuit 230 is connected to the first connection point M2. The control circuit 220 may include a first control circuit and a second control circuit. The first control circuit may be connected in series to a point A1 or a point A2 shown in FIG. 2, to detect directions of a current flowing through the switching device Q1 and a current flowing through the switching device Q4, and further determine whether the switching device Q1 and the switching device Q4 meet an implementation condition of soft switching. In addition, the second control circuit may be connected in series to a point B 1 or a point B2 shown in FIG. 2, to detect directions of a current flowing through the switching device Q2 and a current flowing through the switching device Q3, and further determine whether the switching device Q2 and the switching device Q3 meet the implementation condition of soft switching. Alternatively, the first control circuit may be connected in series to a point A3 or a point A4 shown in FIG. 2, to detect directions of a current flowing through the switching device Q1 and a current flowing through the switching device Q4, and further determine whether the switching device Q1 and the switching device Q4 meet an implementation condition of soft switching. In addition, the second control circuit may be connected in series to a point B3 or a point B4 shown in FIG. 2, to detect directions of a current flowing through the switching device Q2 and a current flowing through the switching device Q3, and determine whether the switching device Q2 and the switching device Q3 meet the implementation condition of soft switching.

In some feasible implementations, the control circuit 220 includes a third control circuit, and the third control circuit may be disposed at a point C shown in FIG. 2. Specifically, for a specific implementation of the third control circuit, refer to the specific implementation of the third control circuit shown in FIG. 1. Details are not described herein again in this embodiment of this application.

In some feasible implementations, the resonant circuit 230 includes a resonant inductor L1 and a resonant capacitor C1 that are connected in series. The rectifier circuit includes a diode D1 and a diode D2 that are connected in series, a diode D3 and a diode D4 that are connected in series, and a rectifier capacitor C2. For a specific connection manner, refer to FIG. 2. It should be noted that specific implementations of the resonant circuit 230, the transformer circuit 240, and the rectifier circuit 250 may be adjusted based on an actual application scenario. This is not limited in embodiments of this application.

In general, the resonant converter provided in embodiments of this application may be the full-bridge resonant converter 200 shown in FIG. 2. When the full-bridge resonant converter 200 controls the switching device Q1, the switching device Q2, the switching device Q3, or the switching device Q4 to be turned on, soft switching of the switching device Q1, the switching device Q2, the switching device Q3, or the switching device Q4 can be accurately implemented, a turn-on loss of the full-bridge resonant converter 200 can be reduced, and reliability is high.

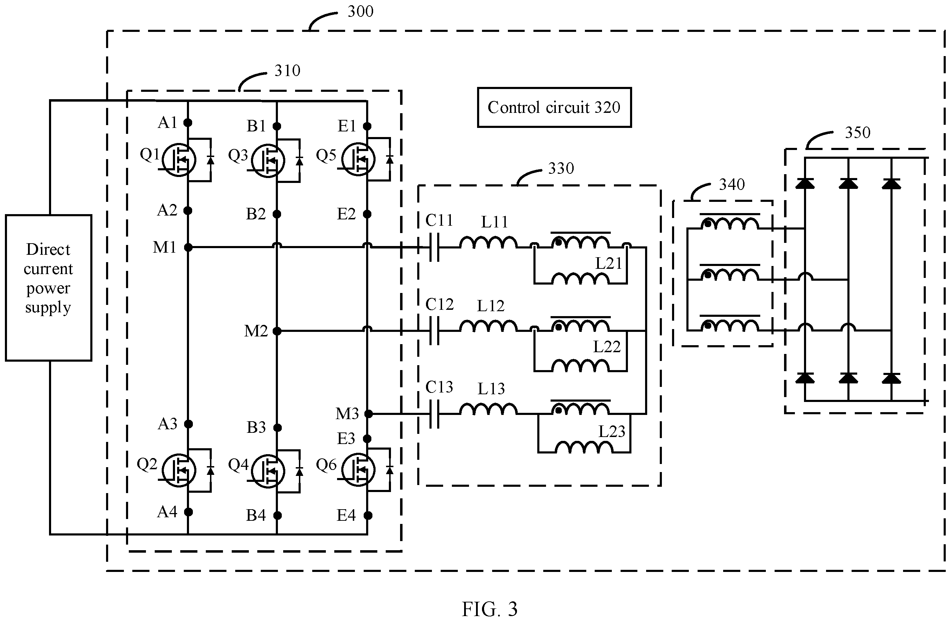

In some feasible implementations, FIG. 3 is a diagram of a structure of a three-phase resonant converter according to an embodiment of this application. An input of the three-phase resonant converter 300 shown in FIG. 3 is connected to a direct current power supply, and an output of the three-phase resonant converter 300 is connected to a load. The three-phase resonant converter 300 includes a switch circuit 310, a control circuit 320, a resonant circuit 330, a transformer circuit 340, and a rectifier circuit 350.

It should be noted that, for functions and effects of the circuits in the three-phase resonant converter 300, refer to the specific implementation of the half-bridge resonant converter 100 in FIG. 1. Details are not described herein again in this embodiment of this application.

In some feasible implementations, the switch circuit 310 includes a switching device Q1 and a switching device Q2 that are connected in series to a first connection point M1, a switching device Q3 and a switching device Q4 that are connected in series to a first connection point M2, and a switching device Q5 and a switching device Q6 that are connected in series to a first connection point M3. The resonant circuit 330 is separately connected to the first connection point M1, the first connection point M2, and the first connection point M3. The control circuit 320 may include a first control circuit, a second control circuit, and a third control circuit. The first control circuit may be connected in series to a point A1 or a point A2 shown in FIG. 3, the second control circuit may be connected in series to a point B1 or a point B2 shown in FIG. 3, and the third control circuit may be connected in series to a point E1 or a point E2 shown in FIG. 3; or the first control circuit may be connected in series to a point A3 or a point A4 shown in FIG. 3, the second control circuit may be connected in series to a point B3 or a point B4 shown in FIG. 3, and the third control circuit may be connected in series to a point E3 or a point E4 shown in FIG. 3. It may be understood that, for a specific implementation of the control circuit 320 in FIG. 3, refer to the specific implementation of the control circuit 220 shown in FIG. 2. Details are not described herein again in this embodiment of this application.

In some feasible implementations, the resonant circuit 330 includes a resonant inductor L11, a resonant inductor L12, and a resonant capacitor C11 that are connected in series, a resonant inductor L21, a resonant inductor L22, and a resonant capacitor C21 that are connected in series, and a resonant inductor L31, a resonant inductor L32, and a resonant capacitor C31 that are connected in series. The transformer circuit 340 includes a first coil N1 and a second coil N2. The rectifier circuit includes a diode D1 and a diode D2 that are connected in series, a diode D3 and a diode D4 that are connected in series, and a diode D5 and a diode D6 that are connected in series. For a specific connection manner, refer to FIG. 3. It should be noted that specific implementations of the resonant circuit 330, the transformer circuit 340, and the rectifier circuit 350 may be adjusted based on an actual application scenario. This is not limited in embodiments of this application.

In general, the resonant converter provided in embodiments of this application may be the three-phase resonant converter 300 shown in FIG. 3. When the three-phase resonant converter 300 controls the switching device Q1, the switching device Q2, the switching device Q3, the switching device Q4, the switching device Q5, or the switching device Q6 to be turned on, soft switching of the switching device Q 1, the switching device Q2, the switching device Q3, the switching device Q4, the switching device Q5, or the switching device Q6 can be accurately implemented, a turn-on loss of the three-phase resonant converter 300 can be reduced, and reliability is high.

The resonant converter provided in embodiments of this application may obtain, through a current detection module connected to the switching device, a direction of a current flowing through the switching device. When the direction of the current flowing through the switching device is a first direction, it indicates that the switching device meets the implementation condition of soft switching. In this case, the resonant converter may control, through a drive module based on a drive control signal of the switching device when a turn-on period of the switching device arrives, in other words, when the drive control signal is at a high level, the switching device to implement soft switching. In this embodiment of this application, the resonant converter detects, through the current detection module, the direction of the current flowing through the switching device, and can determine, before the drive module controls the switching device to be turned on, whether the switching device meets the implementation condition of soft switching. This ensures accurate implementation of soft switching of the switching device, and does not require additional software calculation, so that reliability and applicability are high.

It should be noted that the resonant converter may further include a control chip. The control chip may be understood as a central processing unit of the resonant converter, for example, an integrated circuit (Integrated Circuit, IC). The control chip may adjust the switch circuit, the resonant circuit, and the like in the resonant converter based on an operating status of the resonant converter, so that the resonant converter operates stably. In some application scenarios, the control circuit 120 and the control chip may be independent devices, and the control circuit may be disposed outside the control chip. Alternatively, in some other cases, the control circuit 120 may be a related control circuit inside the control chip, for example, a digital signal processing (digital signal processing, DSP) unit, a field programmable gate array (field programmable gate array, FPGA), a microcontroller unit (microcontroller unit, MCU), or another device having calculation and control functions.

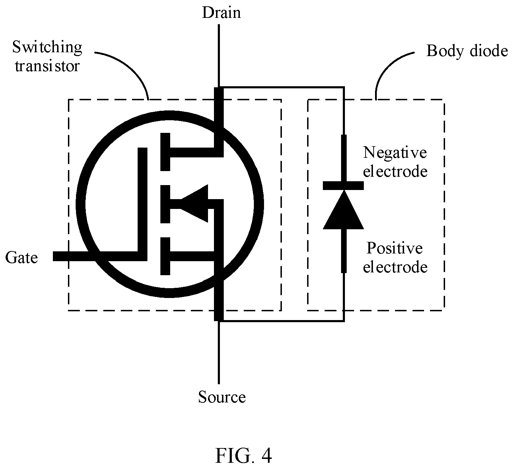

For ease of understanding of an operating principle of the resonant converter provided in embodiments of this application, the following describes, with reference to FIG. 4 to FIG. 13, an example of an operating principle of a control circuit in the resonant converter provided in this application.

It can be learned from the foregoing content that the resonant converter provided in embodiments of this application can accurately implement soft switching of the switching device through the control circuit, to reduce a turn-on loss of the switch circuit and improve operating efficiency of the resonant converter. The switching device controlled by the control circuit provided in embodiments of this application may be a metal-oxide semiconductor field-effect (MOSFET, MOS) transistor, an insulated-gate bipolar transistor (Insulate-Gate Bipolar Transistor, IGBT), or the like. Examples are not enumerated one by one herein in embodiments of this application. For ease of understanding, in embodiments of this application, the following uses an example of a control principle in which the control circuit implements soft switching of a single switching device for detailed description.

It should be noted that, it can be learned from the foregoing content that, to ensure that the switching device is turned on at a zero voltage and accurately implement soft switching, the control circuit may determine, before controlling the switching device to be turned on, whether the switching device meets an implementation condition of soft switching. In view of this, during practice, the inventor of this application finds that, when a current flows from a body diode inside the switching device like the MOS transistor or the IGBT through the switching device, a voltage between two ends of the switching device is clamped at 0 volts. In this case, the voltage and the current of the switching device do not overlap, in other words, if the switching device meets the implementation condition of soft switching, the control circuit may control the switching device to accurately implement soft switching.

Specifically, FIG. 4 is a diagram of an operating principle of a switching device according to an embodiment of this application. The switching device shown in FIG. 4 is a MOS transistor, and the MOS transistor includes a switching transistor and a body diode. A drain of the switching transistor is connected to a negative electrode of the body diode, a source of the switching transistor is connected to a positive electrode of the body diode, and a gate of the switching transistor is connected to a control circuit. The body diode is generated through a production process. The control circuit may output a high level to the gate of the switching transistor, to control the switching transistor to be turned on, that is, control the switching device to be turned on. In this case, a current flows from the drain of the switching transistor to the source. Alternatively, the control circuit may output a low level to the gate of the switching transistor, to control the switching transistor to be turned off, that is, control the switching device to be turned off. Further, because the positive electrode of the body diode is connected to the source of the switching transistor, and the negative electrode of the body diode is connected to the drain of the switching transistor, when the switching transistor is turned off, if a current flows through the positive electrode of the body diode and the negative electrode, a small voltage drop limit of the body diode causes a voltage between the drain and the source of the switching transistor to decrease until the voltage is equal to 0 volts. In this case, the control circuit may control the switching transistor to implement soft switching, that is, implement soft switching of the switching device. In general, when the switching device is turned off, a current flows from the body diode in the switching device through the switching device, so that a voltage between two ends of the switching device is equal to 0 volts. In this case, if the switching device meets an implementation condition of soft switching, the control circuit can control the switching device to accurately implement soft switching.

Similarly, for another switching device with a body diode, for example, an IGBT, the control circuit may also determine, according to the foregoing principle, whether the switching device meets the condition of soft switching, in other words, whether the voltage between two ends of the switching device is equal to 0 volts, to accurately implement soft switching of the switching device. Details are not described herein again in this application.

It can be learned that, before controlling the switching device to be turned on, the control circuit provided in this embodiment of this application may detect the direction of the current flowing through the switching device, to determine, when the direction of the current is a direction in which the current flows from the body diode of the switching device through the switching device, that the voltage between the two ends of the switching device is equal to 0 volts, and further determine that the switching device meets the implementation condition of soft switching, so that soft switching of the switching device can be accurately implemented. It should be noted that, it can be learned from the foregoing content that the direction in which the current flows from the body diode through the switching device is opposite to the direction in which the current flows through the switching device when the switching device is turned on. For example, when the switching device shown in FIG. 4 is turned on, a current flows from the drain of the switching device to the source. When the switching device is turned off, and a current flows from the body diode inside the switching device through the switching device, the current flows from the source of the switching device to the drain. Therefore, before controlling the switching device to be turned on, the control circuit provided in this embodiment of this application may detect the direction of the current flowing through the switching device, and when the direction of the current is opposite to the direction in which the current flows through the switching device when the switching device is turned on, determine that the current flows from the body diode inside the switching device through the switching device, to further determine that the voltage between the two ends of the switching device is equal to 0 volts, and the switching device meets the implementation condition of soft switching.

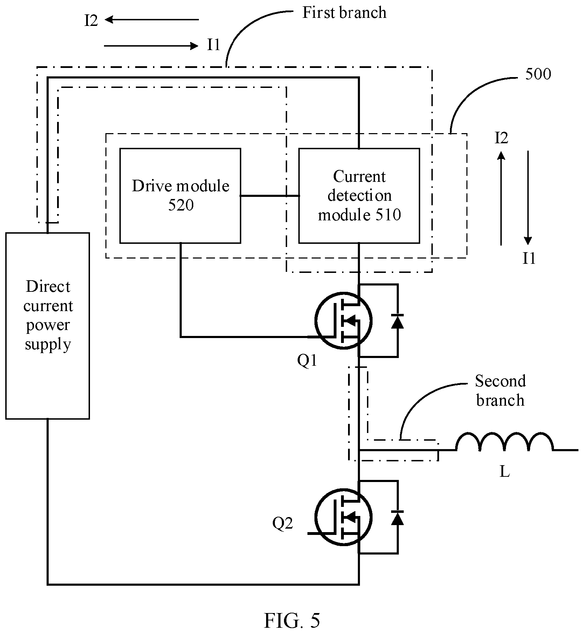

In some feasible implementations, FIG. 5 is a diagram of a structure of a control circuit according to an embodiment of this application. A switching device Q 1 shown in FIG. 5 is connected to a direct current power supply through a first branch, and is connected to a resonant inductor L through a second branch. A switching device Q2 is connected in series to the switching device Q1. The resonant inductor L may be understood as the resonant inductor L1 in the resonant circuit 130 or the resonant circuit 230, or may be understood as the resonant inductor L11, the resonant inductor L12, and the resonant inductor L12 in the resonant circuit 330. A direction of a current flowing through the first branch is consistent with a direction of a current flowing through the switching device Q1. For example, it is assumed that the direct current power supply outputs a first direct current I1 to the switching device Q 1. In this case, the first direct current I1 flows through the first branch from left to right, flows through the switching device Q1 from top to bottom, flows through the second branch from left to right, and is transmitted to the resonant inductor L. In this case, the direction of the current flowing through the switching device Q1 is consistent with the direction of the current flowing through the first branch. Similarly, it is assumed that the resonant inductor L outputs a second direct current I2 to the switching device Q1. In this case, the second direct current I2 flows through the second branch from right to left, flows through the switching device Q1 from bottom to top, and flows through the first branch from right to left. In this case, the direction of the current flowing through the switching device Q1 is consistent with the direction of the current flowing through the first branch.

In some feasible implementations, it can be learned from the foregoing content that, the control circuit 500 may determine, by detecting the direction of the current flowing through the switching device Q1, whether the switching device Q1 meets the implementation condition of soft switching. Because the direction of the current flowing through the first branch is the same as the direction of the current flowing through the switching device Q1, the control circuit 500 may determine, by detecting the direction of the current flowing through the first branch, the direction of the current flowing through the switching device Q 1, and further determine whether the switching device Q1 meets the implementation condition of soft switching.

Specifically, the control circuit 500 shown in FIG. 5 includes a current detection module 510. The current detection module 510 is connected in series to the first branch, and may detect the current direction of the first branch. Further, when the current detection module 510 detects that the current direction of the first branch is a first direction, it indicates that a current flows from a body diode of the switching device Q1 through the switching device Q1, in other words, a voltage between two ends of the switching device Q1 is equal to 0 volts. The first direction is a reverse direction of the current flowing through the first branch when the switching device Q1 is turned on.

For example, it is assumed that when the switching device Q1 shown in FIG. 5 is turned on, a current flowing through the switching device Q1 is the first direct current I1. In this case, when the switching device Q1 is turned on, the direction of the current flowing through the first branch is from left to right (namely, a current direction of the first direct current I1). Further, when the switching device Q 1 is turned off, if the current flows from the body diode inside the switching device Q1 through the switching device Q1, the current flowing through the switching device Q1 is the second direct current I2 whose direction is opposite to that of the first direct current I1. In this case, the direction of the current flowing through the first branch is from right to left (namely, a current direction of the second direct current I2). Therefore, the current detection module 510 may determine a current direction that is from right to left as the first direction. It may be understood that, when the current detection module 510 detects that the current direction of the first branch is the first direction, that is, from right to left, it indicates that the current flows from the body diode of the switching device Q1 through the switching device Q1, and the voltage between the two ends of the switching device Q1 is equal to 0 volts, so that soft switching can be implemented.

Similarly, it is assumed that when the switching device Q1 shown in FIG. 5 is turned on, the current flowing through the switching device Q1 is the second direct current I2. In this case, when the switching device Q1 is turned on, the direction of the current flowing through the first branch is from right to left (namely, the current direction of the second direct current I2). Further, when the switching device Q1 is turned off, if the current flows from the body diode inside the switching device Q1 through the switching device Q1, the current flowing through the switching device Q1 is the first direct current I1 whose direction is opposite to that of the second direct current I2. In this case, the direction of the current flowing through the first branch is from left to right (namely, the current direction of the first direct current I1). Therefore, the current detection module 510 may determine a current direction that is from left to right as the first direction. It may be understood that, when the current detection module 510 detects that the current direction of the first branch is the first direction, that is, from left to right, it indicates that the current flows from the body diode of the switching device Q1 through the switching device Q 1, and the voltage between the two ends of the switching device Q1 is equal to 0 volts, so that soft switching can be implemented.

In some feasible implementations, as shown in FIG. 5, the control circuit 500 further includes a drive module 520. The drive module 520 is connected to the current detection module 510 and connected to the switching device Q1, and may control the switching device Q1 to be turned on or off. Generally, the drive module 520 may control, based on a drive control signal, the switching device Q1 to be turned on or off. The drive control signal is a pulse width modulation (Pulse width modulation, PWM) signal. A high-level state of the PWM signal represents a turn-on period of the switching device Q1, and a low-level state of the PWM signal represents a turn-off period of the switching device Q1. Further, the drive module 520 may adjust a duty cycle and a frequency of the PWM signal, to adjust a switching frequency of the switching device Q1. The duty cycle of the PWM signal is a percentage of a time in which the PWM signal is in the high-level state in a total period time, and the frequency of the PWM signal represents a speed of switching the PWM signal between the high-level state and the low-level state. It may be understood that the frequency of the PWM signal is equal to the switching frequency of the switching device Q1. In this case, the drive module 520 may increase the frequency of the PWM signal, so that the switching device Q1 operates at a high frequency. Further, to enable the drive module 520 to control, when the turn-on period of the switching device Q1 arrives, in other words, when the PWM signal is in the high-level state, the switching device Q1 to implement soft switching, the current detection module 510 may generate a high level and transmit the high level to the drive module 520 when detecting that the current direction of the first branch is the first direction. The high level indicates that the voltage between the two ends of the switching device Q1 is equal to 0 volts, in other words, the switching device Q1 meets the implementation condition of soft switching. Therefore, when the drive module 520 receives the high level, the drive module 520 controls, based on the PWM signal when the turn-on period of the switching device Q1 arrives, the switching device Q1 to be turned on, so that soft switching can be accurately implemented, and a turn-on loss can be reduced.

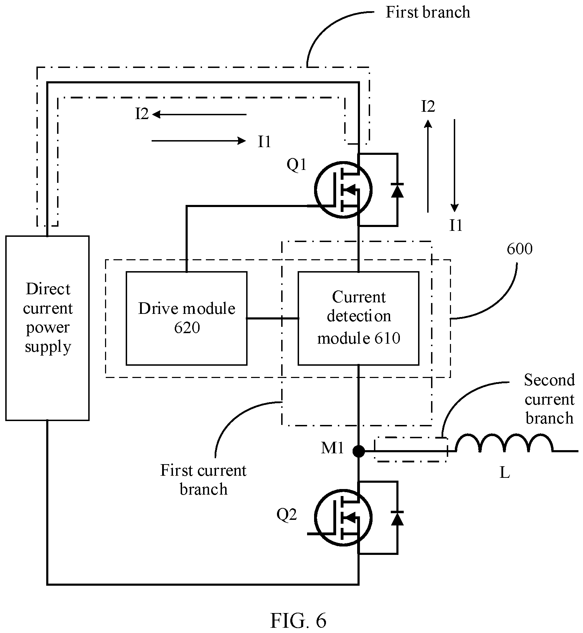

In some feasible implementations, in addition to detecting the current direction of the first branch, the control circuit may further determine, by detecting a current direction of the second branch, the direction of the current flowing through the switching device, to determine whether the switching device meets the implementation condition of soft switching. Specifically, FIG. 6 is a diagram of another structure of a control circuit according to an embodiment of this application. A switching device Q1 shown in FIG. 6 is connected to a direct current power supply through a first branch, is connected to a resonant inductor L through a second branch, and is connected in series to a switching device Q2 at a first connection point M1. The switching device Q2 is further connected to the direct current power supply. The resonant inductor L may be understood as the resonant inductor L1 in the resonant circuit 130 or the resonant circuit 230, or may be understood as the resonant inductor L11, the resonant inductor L12, and the resonant inductor L12 in the resonant circuit 330. The second branch includes a first current branch and a second current branch. The first current branch is a branch to which the switching device Q1 and the first connection point M1 are connected, and the second current branch is a branch to which the resonant inductor and the first connection point M1 are connected. It may be understood that a direction of a current flowing through the first current branch is consistent with a direction of a current flowing through the switching device Q1. For example, it is assumed that the direct current power supply outputs a first direct current I1 to the switching device Q1. In this case, the first direct current I1 flows through the first branch from left to right, flows through the switching device Q1 from top to bottom, flows through the first current branch from top to bottom, and is transmitted to the resonant inductor L. In this case, the direction of the current flowing through the switching device Q1 is consistent with the direction of the current flowing through the first current branch. Similarly, it is assumed that the resonant inductor L outputs a second direct current I2 to the switching device Q1. In this case, the second direct current I2 flows through the first current branch from bottom to top, flows through the switching device Q1 from bottom to top, and flows through the first branch from right to left. In this case, the direction of the current flowing through the switching device Q1 is consistent with the direction of the current flowing through the first current branch.

It can be learned from the foregoing content that, the control circuit 600 may determine, by detecting the direction of the current flowing through the switching device Q1, whether the switching device Q1 meets the implementation condition of soft switching. Because the direction of the current flowing through the first current branch is the same as the direction of the current flowing through the switching device Q1, the control circuit 600 may determine, by detecting the direction of the current flowing through the first current branch, the direction of the current flowing through the switching device Q1, and further determine whether the switching device Q1 meets the implementation condition of soft switching.

Specifically, the control circuit 600 shown in FIG. 6 includes a current detection module 610. The current detection module 610 is connected in series to the first current branch, and may detect the current direction of the first current branch. Further, when the current detection module 610 detects that the current direction of the first current branch is a first direction, it indicates that a current flows from a body diode of the switching device Q1 through the switching device Q1, in other words, a voltage between two ends of the switching device Q1 is equal to 0 volts. The first direction is a reverse direction of the current flowing through the first current branch when the switching device Q1 is turned on.

It should be noted that, for a specific implementation in which the current detection module 610 detects the current direction of the first current branch, refer to the specific implementation of the current detection module 510 in FIG. 5. Details are not described herein again in this embodiment of this application.

In some feasible implementations, the control circuit 600 shown in FIG. 6 further includes a drive module 620. For a specific implementation of the drive module 620, refer to the specific implementation of the drive module 520 shown in FIG. 5. Details are not described herein again in this embodiment of this application.

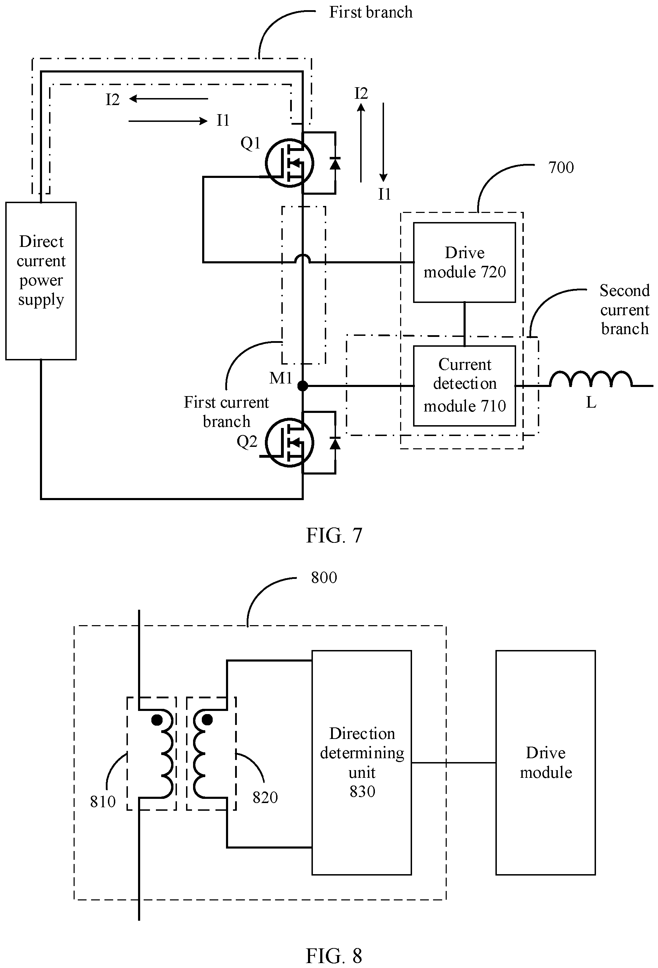

In some feasible implementations, in addition to detecting the current direction of the first branch or the first current branch in the second branch, the control circuit may further determine, by detecting a current direction of the second current branch in the second branch, the direction of the current flowing through the switching device, to determine whether the switching device meets the implementation condition of soft switching. Specifically, FIG. 7 is a diagram of still another structure of a control circuit according to an embodiment of this application. A switching device Q1 shown in FIG. 7 is connected to a direct current power supply through a first branch, is connected to a resonant inductor L through a second branch, and is connected in series to a switching device Q2 at a first connection point M1. The switching device Q2 is further connected to the direct current power supply. The resonant inductor L may be understood as the resonant inductor L1 in the resonant circuit 130 or the resonant circuit 230, or may be understood as the resonant inductor L11, the resonant inductor L12, and the resonant inductor L12 in the resonant circuit 330. The second branch includes a first current branch and a second current branch. The first current branch is a branch to which the switching device Q1 and the first connection point M1 are connected, and the second current branch is a branch to which the resonant inductor and the first connection point M1 are connected. It may be understood that a direction of a current flowing through the second current branch is related to a direction of a current flowing through the switching device Q1. For example, it is assumed that a current direction existing when the switching device Q1 is turned on is from top to bottom. In this case, when the direction of the current flowing through the switching device Q1 is from bottom to top, a voltage between two ends of the switching device Q1 is equal to 0 volts. Further, when the resonant inductor L outputs a second direct current I2 to the switching device Q1, the second direct current I2 flows through the second current branch from right to left, and flows through the switching device Q1 from bottom to top. In this case, the voltage between the two ends of the switching device Q1 is equal to 0 volts, and when detecting that the current direction of the second current branch is from right to left, the control circuit may determine that the switching device Q1 meets the implementation condition of soft switching.

Similarly, the direction of the current flowing through the second current branch is also related to a direction of a current flowing through the switching device Q2. For example, it is assumed that a current direction when the switching device Q2 is turned on is from top to bottom. In this case, when the direction of the current flowing through the switching device Q2 is from bottom to top, a voltage between two ends of the switching device Q2 is equal to 0 volts. In this case, the direction of the current flowing through the second current branch is from left to right. It can be learned that, the direction of the current flowing through the second current branch when the voltage between the two ends of the switching device Q1 is 0 volts is opposite to the direction of the current flowing through the second current branch when the voltage between the two ends of the switching device Q2 is 0 volts. The control circuit 700 may determine, when detecting that the current direction of the second current branch is from right to left, that the switching device Q1 meets the implementation condition of soft switching, and determine, when detecting that the current direction of the second current branch is from left to right, that the switching device Q2 meets the implementation condition of soft switching. The foregoing is merely an example, and does not constitute a limitation on this application.

Specifically, the control circuit 700 shown in FIG. 7 includes a current detection module 710. The current detection module 710 is connected in series to the second current branch, and may detect the current direction of the second current branch. Further, the current detection module 710 may detect the direction of the current flowing through the second current branch, and when the direction of the current flowing through the second current branch is a first direction, determine that the voltage between the two ends of the switching device Q1 is equal to 0 volts. The first direction represents the direction of the current flowing through the second current branch when the current flows from a body diode of the switching device Q1 through the switching device Q1. Further, when detecting that the direction of the current flowing through the second current branch is a reverse direction of the first direction, the current detection module 710 may determine that the voltage between the two ends of the switching device Q2 is equal to 0 volts.

It should be noted that, for a specific implementation in which the current detection module 710 detects the current direction of the second current branch, refer to the specific implementation of the current detection module 510 in FIG. 5. Details are not described herein again in this embodiment of this application.

In some feasible implementations, the control circuit 700 shown in FIG. 7 further includes a drive module 720. For a specific implementation of the drive module 720, refer to the specific implementation of the drive module 520 shown in FIG. 5. Details are not described herein again in this embodiment of this application.

The resonant converter provided in this application may obtain, through the current detection module connected in series to the first branch or the second branch, the direction of the current flowing through the first branch or the second branch, and determine, when the current detection module detects that the direction of the current flowing through the first branch or the second branch is the first direction, that the switching device meets the implementation condition of soft switching. Further, when a turn-on period of the switching device arrives, in other words, when the drive control signal is at a high level, the resonant converter controls, through the drive module based on the drive control signal of the switching device, the switching device to implement soft switching. In this embodiment of this application, the resonant converter detects the direction of the current on the first branch or the second branch through the current detection module of the control circuit, and can determine, before the drive module controls the switching device to be turned on, whether the switching device meets the implementation condition of soft switching. This ensures accurate implementation of soft switching of the switching device, and does not require additional software calculation, so that reliability and applicability are high.

In some feasible implementations, FIG. 8 is a diagram of a structure of a current detection module according to an embodiment of this application. The current detection module 800 shown in FIG. 8 includes a primary coil 810, a secondary coil 820, and a direction determining unit 830. It should be noted that the primary coil 810 may be connected in series to the first branch shown in FIG. 3, or connected in series to the first current branch in the second branch shown in FIG. 4, or connected in series to the second current branch in the second branch shown in FIG. 5. The secondary coil 820 is coupled to the primary coil 810, and is connected to the direction determining unit 830. The direction determining unit 830 is connected to a drive module.

The primary coil 810 is connected in series to the first branch or the second branch. When a current of the first branch or the second branch flows through the primary coil 810, the primary coil 810 may generate a magnetic field under an action of a current change, so that the coupled secondary coil 820 generates a corresponding induced current under an action of the magnetic field. It may be understood that a dotted terminal of the primary coil and a dotted terminal of the secondary coil 820 shown in FIG. 8 are on a same side. In this case, a direction of the current flowing through the primary coil 810 is opposite to a direction of the induced current generated on the secondary coil 820. In other words, when the current of the first branch or the second branch flows through the primary coil 810 from top to bottom, the direction of the induced current generated on the secondary coil 820 is from bottom to top. In some application scenarios, the direction of the current flowing through the primary coil 810 may alternatively be the same as the direction of the induced current generated on the secondary coil 820. This is not limited in embodiments of this application.

It can be learned that the primary coil 810 couples, to the secondary coil 820, the current flowing through the first branch or the second branch, so that an induced current whose current direction is related to the direction of the current flowing through the first branch or the second branch can be generated in the secondary coil 820. Further, the secondary coil 820 transmits the induced current to the direction determining unit 830, and the direction determining unit 830 determines the direction of the induced current, and obtains, based on the determined direction of the induced current, the direction of the current flowing through the first branch or the second branch. It may be understood that, when the direction determining unit 830 learns, based on the direction of the induced current, that the direction of the current flowing through the first branch or the second branch is a first direction, the direction determining unit 830 may determine that a voltage between two ends of the switching device is equal to 0 volts, in other words, the switching device meets the implementation condition of soft switching. In this case, the direction determining unit 830 may generate a high level, and transmit the high level to the drive module, so that when the drive module obtains the high level and a turn-on period of the switching device arrives, the drive module controls, based on a drive control signal of the switching device, the switching device to implement soft switching.

For example, it is assumed that when the direction of the current flowing through the first branch or the second branch is the first direction, the direction of the current flowing through the primary coil 810 is from top to bottom, and the direction of the induced current generated by the secondary coil 820 based on the current flowing through the primary coil 810 from top to bottom is from bottom to top. When the direction determining unit 830 receives the induced current generated by the secondary coil 820, and determines that the direction of the induced current flowing through the secondary coil 820 is from bottom to top, the direction determining unit 830 may learn that a direction of the current flowing through the primary coil 810 is from top to bottom, and may further learn that the direction of the current flowing through the first branch or the second branch is the first direction. In this case, if the voltage between the two ends of the switching device is equal to 0 volts, in other words, the switching device meets the implementation condition of soft switching, the direction determining unit 830 may output a high level to the drive unit, so that when the drive module obtains the high level and the turn-on period of the switching device arrives, the drive module controls, based on the drive control signal of the switching device, the switching device to implement soft switching. It may be understood that the foregoing is merely an example, and does not constitute a limitation on embodiments of this application.

In this embodiment of this application, the primary coil is connected in series to the first branch or the second branch, so that the current detection module can couple, to the secondary coil, the current flowing through the first branch or the second branch, and determine, through the direction determining unit based on the direction of the induced current generated by the secondary coil, the direction of the current flowing through the first branch or the second branch. In addition, because the primary coil is coupled to the secondary coil, different parts of the circuit can be effectively isolated, thereby implementing protection and security functions.

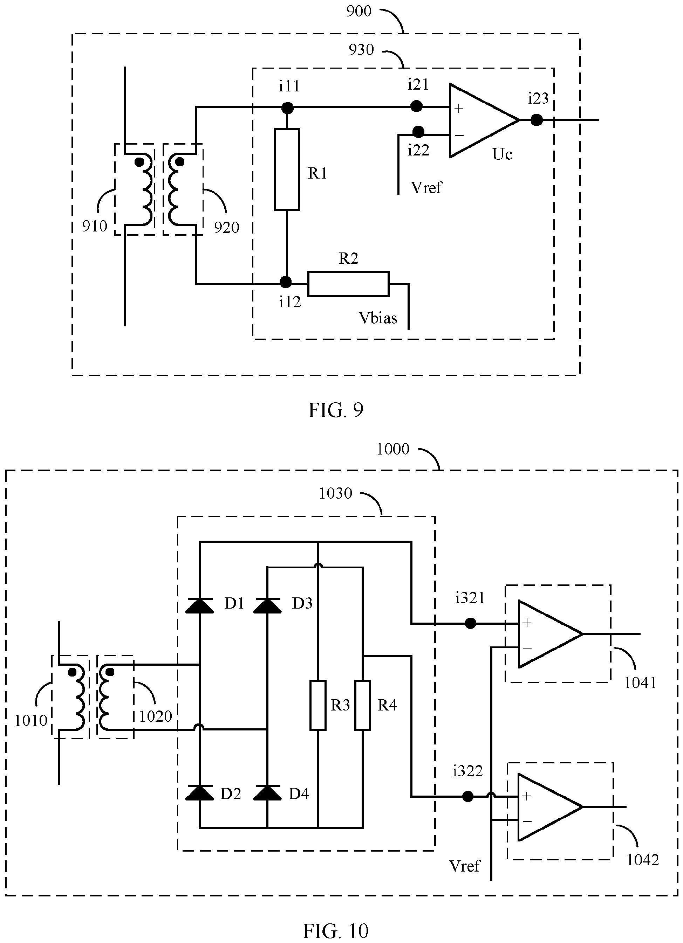

In some feasible implementations, a specific structure of the current detection module 510 shown in FIG. 5 may be shown in FIG. 9. Specifically, FIG. 9 is a diagram of another structure of a current detection module according to an embodiment of this application. The current detection module 900 shown in FIG. 9 includes a primary coil 910, a secondary coil 920, and a direction determining unit 930. The primary coil 910 may be connected in series to the first branch shown in FIG. 5. The secondary coil 920 is coupled to the primary coil 910, and is connected to the direction determining unit 930. The direction determining unit 930 includes a first resistor R1, a second resistor R2, and a comparator Uc, and the direction determining unit 930 is connected to a drive module. The first resistor R1 is connected in parallel to the secondary coil 920. A first end i11 that is of the first resistor R1 and that is connected in parallel to the secondary coil 920 is connected to a first input end i21 of the comparator Uc, and a second end i12 that is of the first resistor R1 and that is connected in parallel to the secondary coil 920 is connected to one end of the second resistor R2. A second input end i22 of the comparator Uc receives a reference voltage, and an output end i23 of the comparator Uc is connected to the drive module.

It should be noted that, when the secondary coil 920 generates an induced current, the induced current flows through the first resistor R1, and a voltage difference is generated between the two ends of the first resistor R1, so that the first end i11 of the first resistor R1 can generate a voltage. A magnitude of the voltage generated by the first end i11 of the first resistor R1 is related to a direction in which the induced current flows through the first resistor R1, that is, is related to a direction of a current flowing through the first branch.

For example, it is assumed that when the induced current generated by the secondary coil 920 flows from the first end i11 of the first resistor R1 to the second end i12, a voltage at the first end i11 is higher than a voltage at the second end i12, and the voltage at the first end i11 is 1.5 volts. When the induced current generated by the secondary coil 920 flows from the second end i12 of the first resistor R1 to the first end i11, the voltage at the first end i11 is lower than the voltage at the second end i12, and the voltage at the first end i11 is -1.5 volts. It can be learned that the comparator Uc may determine, by determining the magnitude of the voltage at the first end i11 of the first resistor R1, the direction in which the induced current flows through the first resistor R1, and may further determine the direction of the current flowing through the first branch. Therefore, the comparator Uc may obtain the voltage at the first end i11 of the first resistor R1 through the first input end i21. The voltage at the first input end i21 may represent the direction in which the induced current flows through the first resistor R1, and represent the direction of the current flowing through the first branch.

Further, to enable the comparator Uc to accurately determine, based on the magnitude of the voltage at the first input end i21, the direction of the current flowing through the first branch, and avoid a determining error caused when the voltage at the first input end i21 is a negative value, in this embodiment of this application, the current detection module 900 may increase the voltage at the first end i11 of the first resistor R1 by loading a bias voltage Vbias to the other end of the second resistor R2, to ensure that the voltage at the first input end i21 is greater than 0. It may be understood that, when the bias voltage Vbias is input through the second resistor R2, a voltage between the first end i11 and the second end i12 of the first resistor R1 increases. For example, it is assumed that the bias voltage Vbias is 1.5 volts. In this case, when the secondary coil 920 does not generate the induced current, the voltage at the first input end i21 is 1.5 volts. Further, when the induced current generated by the secondary coil 920 flows from the second end i12 of the first resistor R1 to the first end i11, the voltage at the first input end i21 is -1.5+1.5=0 volts. Similarly, when the induced current generated by the secondary coil 920 flows from the second end i12 of the first resistor R1 to the first end i11, the voltage at the first input end i21 is 1.5+1.5=3 volts.

It can be learned that, in this embodiment of this application, the current detection module 900 may generate, through the first resistor R1 and the second resistor R2, voltages of different magnitudes at the first end i11 of the first resistor R1 when directions of the induced currents flowing through the first resistor R1 are different, in other words, when directions of the currents flowing through the first branch are different, so that voltages at the first input end i21 of the comparator Uc are different; and may further determine the direction of the current flowing through the first branch based on a magnitude of the voltage at the first input end i21. In addition, the current detection module 900 further enables, based on the bias voltage Vbias, the voltage at the first input end i21 of the comparator Uc to be greater than 0. This ensures determining accuracy of the comparator Uc.

Further, the comparator Uc may determine the voltage at the first input end i21 based on the reference voltage Vref at the second input end i22. For example, it can be learned from the foregoing content that, when the direction of the current flowing through the first branch is a first direction, the induced current generated by the secondary coil 920 flows from the second end i12 of the first resistor R1 to the first end i11, and the voltage at the first input end i21 is 1.5+1.5=3 volts. On the contrary, when the induced current generated by the secondary coil 920 flows from the second end i12 of the first resistor R1 to the first end i11, the voltage at the first input end i21 is - 1.5+1.5=0 volts. In this case, the comparator Uc may set the reference voltage Vref to 1.5 volts, and when the voltage at the first input end i21 is greater than the voltage 1.5 volts of the reference voltage Vref, determine that the direction of the current flowing through the first branch is the first direction, in other words, a voltage at two ends of the switching device is equal to 0 volts. In this case, the comparator Uc outputs a high level to the drive module, so that when the drive module obtains the high level and the turn-on period of the switching device arrives, the drive module controls, based on the drive control signal of the switching device, the switching device to implement soft switching. It may be understood that the foregoing is merely an example, and does not constitute a limitation on embodiments of this application.

In some feasible implementations, for a specific structure of the current detection module 610 shown in FIG. 6, refer to the specific implementation shown in FIG. 9. Details are not described herein again in this embodiment of this application.

In some feasible implementations, it can be learned from the foregoing content that, in the control circuit 700 shown in FIG. 7, the switching device Q1 and the switching device Q1 are connected in series to the second current branch. The direction of the current flowing through the second current branch when the voltage between the two ends of the switching device Q1 is 0 volts is opposite to the direction of the current flowing through the second current branch when the voltage between the two ends of the switching device Q2 is 0 volts. To enable the current detection module 710 to determine, based on the direction of the current flowing through the second current branch, a switching device (the switching device Q1 or the switching device Q2) that meets the implementation condition of soft switching, a specific structure of the current detection module 710 shown in FIG. 7 may be shown in FIG. 10. Specifically, FIG. 10 is a diagram of still another structure of a current detection module according to an embodiment of this application. The current detection module 1000 shown in FIG. 10 includes a primary coil 1010, a secondary coil 1020, a rectifier 1030, a comparator 1041, and a comparator 1042. The primary coil 1010 is connected in series to the second current branch in the second branch shown in FIG. 7. The secondary coil 1020 is coupled to the primary coil 1010, and is connected to an input of the rectifier 1030. An output end i31 of the rectifier 1030 is connected to a first input of the comparator 1041, and an output end i32 of the rectifier 1030 is connected to a first input of the comparator 1042. Both a second input of the comparator 1041 and a second input of the comparator 1042 receive a reference voltage Vref.

It may be understood that, when directions of currents flowing through the second current branch are different, directions of induced currents generated by the secondary coil 1020 are also different, and the rectifier 1030 may rectify the induced currents in different directions, and generate a corresponding voltage at the output end i31 or the output end i32. A magnitude of the voltage at the output end i31 or the output end i32 of the rectifier 1030 is related to the direction of the induced current generated by the secondary coil 1020, that is, is related to the direction of the current flowing through the second current branch. Therefore, the comparator 1041 may determine, based on a magnitude of a voltage at the first input of the comparator 1041, the direction of the current flowing through the second current branch, and the comparator 1042 may also determine, based on a magnitude of a voltage at the first input of the comparator 1042, the direction of the current flowing through the second current branch. The comparator 1041 and the comparator 1042 may separately determine, based on the respective magnitude of the voltage at the first input of the comparator 1041 and the comparator 1042, the direction of the current flowing through the second current branch, and further determine the switching device that meets the implementation condition of soft switching.

For example, it is assumed that when the direction of the current flowing through the second current branch is the first direction, the induced current generated by the secondary coil 1020 shown in FIG. 10 flows from bottom to top. The first direction represents the direction of the current flowing through the second current branch when the current flows from a body diode of the switching device Q1 through the switching device Q 1. In this case, after the input of the rectifier 1030 shown in FIG. 10 obtains the induced current, a voltage of 3 volts is generated at the output end i31 of the rectifier 1030, and no voltage is generated at the output end i32 of the rectifier 1030, in other words, a voltage at the output end i32 of the rectifier 1030 is 0 V. On the contrary, when the induced current generated by the secondary coil 1020 flows from top to bottom, after the input of the rectifier 1030 obtains the induced current, a voltage of 3 volts is generated at the output end i32 of the rectifier 1030, and no voltage is generated at the output end i31 of the rectifier 1030, in other words, a voltage at the output end i31 of the rectifier 1030 is 0 volts. It can be learned that the comparator 1041 may determine, by determining the magnitude of the voltage at the output end i31 of the rectifier 1030, whether the switching device Q1 meets the implementation condition of soft switching. Similarly, the comparator 1042 may determine, by determining the magnitude of the voltage at the output end i32 of the rectifier 1030, whether the switching device Q2 meets the implementation condition of soft switching. Therefore, the comparator 1041 may obtain the voltage at the output end i31 of the rectifier 1030 through the first input of the comparator 1041, and the comparator 1042 may obtain the voltage at the output end i32 of the rectifier 1030 through the first input of the comparator 1042.

Further, the comparator 1041 determines a magnitude of the voltage at the first input end based on the reference voltage Vref at the second input end. For example, it can be learned from the foregoing content that, when the direction of the current flowing through the second current branch is the first direction, the direction of the induced current generated by the secondary coil 1020 is from bottom to top, and the voltage at the output end i31 of the rectifier 1030 is 3 volts. On the contrary, when the direction of the induced current generated by the secondary coil 1020 is from top to bottom, the voltage at the output end i31 of the rectifier 1030 is 0 volts. In this case, the comparator 1041 may set the reference voltage Vref to 1.5 volts, and when the voltage at the first input of the comparator 1041 is greater than the voltage 1.5 volts of the reference voltage Vref, determine that the direction of the current flowing through the second current branch is the first direction, in other words, the voltage between the two ends of the switching device Q1 is equal to 0 volts. In this case, the comparator 1041 outputs a high level to the drive module, so that when the drive module obtains the high level and the turn-on period of the switching device arrives, the drive module controls, based on the drive control signal of the switching device, the switching device to implement soft switching. Similarly, the comparator 1042 may determine the voltage at the first input end based on the reference voltage Vref at the second input end, to determine whether the switching device Q2 meets the implementation condition of soft switching. Details are not described herein again in this embodiment of this application. It may be understood that the foregoing is merely an example, and does not constitute a limitation on embodiments of this application.

In some feasible implementations, refer to FIG. 10 again. The rectifier 1030 shown in FIG. 10 may specifically include a diode D1 and a diode D2 that are connected in series, a diode D3 and a diode D4 that are connected in series, a third resistor R3, and a fourth resistor R4. One end of the secondary coil 1020 is connected to a series connection point between the diode D1 and the diode D2, and the other end of the secondary coil 1020 is connected to a series connection point between the diode D3 and the diode D4. A negative electrode of the diode D2 is connected to a negative electrode of the diode D4. A positive electrode of the diode D1 is connected to the output end i31, and a positive electrode of the diode D4 is connected to the output end i32.

In some feasible implementations, it can be learned from the foregoing content that the comparator (the comparator 1041 or the comparator 1042) of the current detection module may determine, based on a result of comparison between the voltage at the first input end and the reference voltage Vref at the second input end, the direction of the current flowing through the first branch or the second branch. The magnitude of the voltage at the first input end is related to the direction of the current flowing through the first branch or the second branch, and is also related to a magnitude of the current flowing through the first branch or the second branch. For example, in some application scenarios, when the direction of the current flowing through the first branch or the second branch is the first direction, if the current flowing through the first branch or the second branch is excessively small, the voltage at the first input of the comparator is less than the reference voltage Vref. In this case, the comparator determines, based on the result of comparison between the voltage at the first input end and the reference voltage Vref, that the direction of the current flowing through the first branch or the second branch is a reverse direction of the first direction, in other words, the voltage between the two ends of the switching device is not 0 volts, which leads to erroneous determining, and further affects control of the control circuit on the switching device.

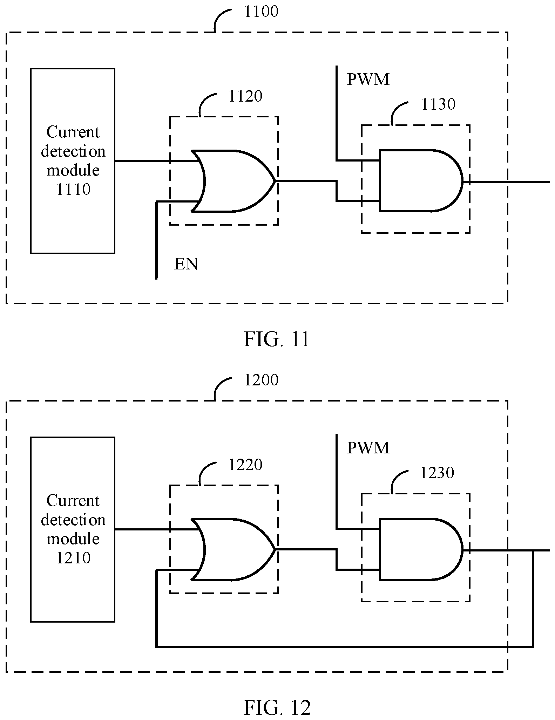

It may be understood that, to accurately implement soft switching of the switching device, the control circuit in this embodiment of this application may enable, based on an enable signal EN when the current flowing through the first branch or the second branch is excessively small, the drive module to control, based on the drive control signal, the switching device to be turned on. Specifically, FIG. 11 is a diagram of yet another structure of a control circuit according to an embodiment of this application. The control circuit 1100 shown in FIG. 11 includes a current detection module 1110, a first OR gate 1120, and a drive module 1130. The first OR gate 1120 is disposed between the current detection module 1110 and the drive module 1130. A first input of the first OR gate 1120 is connected to an output of the current detection module 1110, and may output a high level to the drive module 1130 when receiving a high level output by the current detection module 1110. The high level indicates that a voltage between two ends of the switching device is equal to 0 volts, in other words, the switching device meets an implementation condition of soft switching. Alternatively, when receiving the enable signal EN, a second input of the first OR gate 1120 may output a high level to the drive module 1130. The enable signal EN received by the second input of the first OR gate 1120 may be generated by the control chip of the resonant converter. Specifically, the control chip of the resonant converter may detect a magnitude of a current flowing through a first branch or a second branch, and when detecting that the current flowing through the first branch or the second branch is excessively small, generate the enable signal EN and transmit the enable signal EN to the second input of the first OR gate 1120. It may be understood that a manner of generating the enable signal EN may be adjusted based on an application scenario. Examples are not enumerated one by one in embodiments of this application. Further, when receiving the enable signal EN or the high level output by the current detection module 1110, the first OR gate 1120 outputs the high level to the drive module, so that the drive module controls, based on a drive control signal PWM when obtaining the high level, the switching device to be turned on.

In general, when receiving either the enable signal EN or the high level output by the current detection module 1110, or receiving both the enable signal EN and the high level output by the current detection module 1110, the first OR gate 1120 outputs the high level to the drive module through the output end.

According to the control circuit provided in this embodiment of this application, the first OR gate is disposed between the current detection module and the drive module, so that when the current flowing through the first branch or the second branch is excessively small, the first OR gate outputs a high level to the drive module based on the obtained enable signal. In this way, the drive module controls, based on the drive control signal PWM, the switching device to be turned on, to avoid a problem that the switching device cannot be turned on when the current flowing through the first branch or the second branch is excessively small.

In some feasible implementations, it can be learned from the foregoing content that, after receiving the high level, the drive module controls, based on the drive control signal PWM, the switching device to be turned on in a turn-on period. This can ensure the switching device to implement soft switching. Further, a direction of the current flowing through the switching device when the switching device is turned on is opposite to a direction of a current flowing from a body diode of the switching device through the switching device. In other words, after the drive module controls the switching device to be turned on, if the current detection module detects that the direction of the current flowing through the first branch or the second branch is a reverse direction of the first direction, the current detection module does not output a high level to the drive module. In this case, the drive module does not obtain a high level, and cannot control the switching device to be continuously turned on within the turn-on period of the switching device.

To enable the drive module to control the switching device to implement soft switching, continue to control the switching device to be continuously turned on within the turn-on period, and ensure stable operating of the switching device, the control circuit provided in this embodiment of this application may be provided with a second OR gate between the drive module and the current detection module. For details, refer to FIG. 12. FIG. 12 is a diagram of still yet another structure of a control circuit according to an embodiment of this application. The control circuit 1200 shown in FIG. 12 includes a current detection module 1210, a second OR gate 1220, and a drive module 1230. A first input of the second OR gate 1220 is connected to an output of the current detection module 1210, a second input of the second OR gate 1220 is connected to an output of the drive module 1230, and an output of the second OR gate 1220 is connected to an input of the drive module 1230.

When receiving a high level output by the current detection module 1210, the first input of the second OR gate 1220 may output the high level to the drive module 1230. Alternatively, a high level of the output of the drive module indicates that the drive circuit controls the switching device to be turned on. In this case, after the switching device is turned on, the second OR gate 1220 may receive the high level of the output of the drive module through the second input end connected to the output of the drive module, and output the high level to the drive module. In other words, when the first input of the second OR gate 1220 receives a high level or the output of the drive module is at a high level, the second OR gate 1220 outputs the high level to the drive module, so that the drive module controls, based on the drive control signal PWM, the switching device to continue to be turned on.

In general, the first input of the second OR gate 1220 may receive the high level output by the current detection module, and the second input end may receive a level of the output of the drive module. When receiving the high level, the first input end or the second input of the second OR gate 1220 outputs the high level to the drive module through the output end.

It may be understood that the second input of the second OR gate 1220 is connected to the output of the drive module, and may output a high level to the drive module when the output of the drive module is at the high level, so that the drive module performs self-locking after controlling the switching device to perform soft switching, to continue to control the switching device to be turned on within the turn-on period. This ensures stable operation of the switching device.

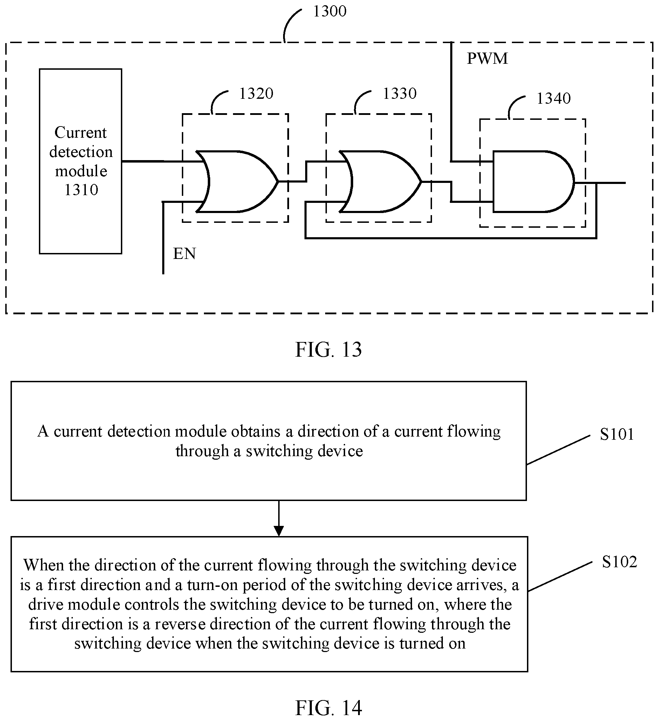

In some feasible implementations, FIG. 13 is a diagram of a further structure of a control circuit according to an embodiment of this application. The control circuit 1300 shown in FIG. 13 includes a current detection module 1310, a first OR gate 1320, a second OR gate 1330, and a drive module 1340. The first OR gate 1320 is disposed between the current detection module 1310 and the second OR gate 1330, and the first OR gate 1320 may receive an enable signal EN. An input of the second OR gate 1330 is connected to an output of the first OR gate 1320 and an output of the drive module 1340, and an output of the second OR gate 1330 is connected to an input of the drive module 1340.

It should be noted that, for a specific implementation of the control circuit 1300 in FIG. 13, refer to the specific implementations of the control circuit shown in FIG. 11 and FIG. 12. Details are not described herein again in this embodiment of this application.

In some feasible implementations, in this embodiment of this application, when receiving a high level, the drive module may control, based on a drive control signal PWM, the switching device to be turned on and implement self-locking when a turn-on period of the switching device arrives, in other words, when the drive control signal PWM is at the high level, so that the switching device is continuously turned on within the turn-on period. In addition, the drive control module may further control, based on the drive control signal PWM, the switching device to be turned off when a turn-off period of the switching device arrives, in other words, when the drive control signal PWM is at a low level, thereby controlling the switching device to be turned on or off.

In some feasible implementations, the drive module may be an AND gate logic circuit. One input of the AND gate logic circuit may receive the drive control signal PWM of the switching device, and the other input of the AND gate logic circuit may receive a high level. When receiving the drive control signal PWM at a high level, and receiving the high level at the same time, the AND gate logic circuit controls the switching device to implement soft switching. When receiving the drive control signal PWM at a low level, the AND gate logic circuit controls the switching device to be turned off.

The control circuit of the switching device provided in this application may obtain, through the current detection module connected in series to the first branch or the second branch, the direction of the current flowing through the first branch or the second branch, and obtain, through the drive module when the current detection module detects that the direction of the current flowing through the first branch or the second branch is the first direction, the high level output by the current detection module. The high level may indicate that the switching device meets the implementation condition of soft switching. It may be understood that, when the drive module of the control circuit obtains the high level, a voltage between two ends of the switching device is equal to 0 volts, in other words, the switching device meets the implementation condition of soft switching. When a turn-on period of the switching device arrives, in other words, when the drive control signal is at a high level, the drive module may control, based on the drive control signal of the switching device, the switching device to implement soft switching. In this embodiment of this application, the control circuit detects the direction of the current on the first branch or the second branch, and can determine, before controlling the switching device to be turned on, whether the switching device meets the implementation condition of soft switching. This ensures accurate implementation of soft switching of the switching device, and does not require additional software calculation, so that reliability and applicability are high.

FIG. 14 is a schematic flowchart of a resonant converter control method according to this application. The resonant converter control method provided in this embodiment of this application is applicable to the control circuit shown in FIG. 1 to FIG. 13. Specifically, the resonant converter control method may include the following steps.

S101: A current detection module obtains a direction of a current flowing through a switching device.

It should be noted that, when the switching device is turned off, a current flows from a body diode in the switching device through the switching device, so that a voltage between two ends of the switching device is equal to 0 volts. In this case, if the switching device meets an implementation condition of soft switching, the control circuit in the resonant converter can control the switching device to accurately implement soft switching. Further, when the current flows from the body diode in the switching device through the switching device, the direction of the current is opposite to a direction in which the current flows through the switching device when the switching device is turned on. Therefore, in the resonant converter control method provided in this embodiment of this application, the current detection module of the switching device may be connected, to obtain the direction of the current flowing through the switching device. It may be understood that, when the current detection module detects that the direction of the current flowing through the switching device is the first direction, it indicates that the voltage between the two ends of the switching device is equal to 0 volts, in other words, the switching device meets the implementation condition of soft switching. The first direction is a reverse direction of the current flowing through the first branch when the switching device is turned on.

It may be understood that, when detecting that the direction of the current flowing through the switching device is the first direction, the current detection module may output a high level to a drive module. The high level may indicate that the switching device meets the implementation condition of soft switching.

For a specific implementation of S101, refer to the implementations performed by the control circuit in FIG. 4 to FIG. 13. Details are not described herein again in this embodiment of this application.

S102: When the direction of the current flowing through the switching device is the first direction and a turn-on period of the switching device arrives, the drive module controls the switching device to be turned on, where the first direction is a reverse direction of the current flowing through the switching device when the switching device is turned on.

It may be understood that, when obtaining the high level, the drive module of the control circuit may control, based on the drive control signal of the switching device when the turn-on period of the switching device arrives, in other words, when the drive control signal is at the high level, the switching device to implement soft switching. In this embodiment of this application, the control circuit detects the direction of the current on the switching device, and can determine, before controlling the switching device to be turned on, whether the switching device meets the implementation condition of soft switching. This ensures accurate implementation of soft switching of the switching device, and does not require additional software calculation, so that reliability and applicability are high.

For a specific implementation of S102, refer to the implementations performed by the control circuit in FIG. 4 to FIG. 13. Details are not described herein again in this embodiment of this application.

In an optional implementation, the control circuit further includes a first OR gate, a first input of the first OR gate is connected to an output of the current detection module, a second input of the first OR gate is configured to receive an enable signal, and an output of the first OR gate is connected to the drive module. The control method further includes: When the direction of the current flowing through the switching device is the first direction, the current detection module outputs a high level to the first OR gate; and the first OR gate outputs a high level to the drive module when obtaining the high level output by the current detection module or receiving the enable signal. That the drive module controls, when the direction of the current flowing through the switching device is a first direction and a turn-on period of the switching device arrives, the switching device to be turned on includes: When the high level output by the first OR gate is obtained and the turn-on period of the switching device arrives, the drive module controls the switching device to be turned on.

It may be understood that, according to the control circuit in this embodiment of this application, the first OR gate is disposed between the current detection module and the drive module, so that when the current flowing through the switching device is excessively small, the first OR gate outputs a high level to the drive module based on the obtained enable signal. In this way, the drive module controls, based on the drive control signal, the switching device to be turned on, to avoid a problem that the switching device cannot be turned on when the current flowing through the first branch or the second branch is excessively small.

In an optional implementation, the control circuit further includes a second OR gate, a first input of the second OR gate is connected to an output of the current detection module, a second input of the second OR gate is connected to an output of the drive module, and an output of the second OR gate is connected to an input of the drive module. The control method further includes: When the direction of the current flowing through the switching device is the first direction, the current detection module outputs a high level to the second OR gate; and when the high level output to the second OR gate is received or the output of the drive module outputs a high level, the second OR gate outputs a high level to the drive module. That the drive module controls, when the direction of the current flowing through the switching device is a first direction and a turn-on period of the switching device arrives, the switching device to be turned on includes: When the high level output by the second OR gate is obtained and the turn-on period of the switching device arrives, the drive module controls the switching device to be turned on.

It may be understood that, the resonant converter is provided with the second OR gate between the current detection module and the drive module, and receives the high level from the output of the drive module through the second input of the second OR gate. After the drive module controls the switching device to be turned on, the second OR gate outputs a high level to the drive module based on the high level of the second input end, so that the drive module performs self-locking after controlling the switching device to perform soft switching, to continue to control the switching device to be turned on within the turn-on period. This ensures stable operation of the switching device.

In an optional implementation, the resonant converter further includes a resonant circuit, the switching device is connected to a direct current power supply through a first branch, the switching device is connected to the resonant circuit through a second branch, and the current detection module is connected in series to the first branch or the second branch. The control method further includes: The current detection module obtains a direction of a current flowing through the first branch or the second branch, to obtain the direction of the current flowing through the switching device.

It may be understood that, in this embodiment of this application, the current detection module is connected in series to the first branch or the second branch, so that the resonant converter can detect the direction of the current flowing through the first branch or the second branch, and further determine the direction of the current flowing through the switching device.

In an optional implementation, the resonant converter includes the resonant circuit, two control circuits, and two switching devices, the two switching devices are connected in series and then connected in parallel to two ends of the direct current power supply, and the resonant circuit is connected to a first connection point at which the two switching devices are connected in series. The two switching devices are in a one-to-one correspondence with the two control circuits, and the control circuit is connected in series between the corresponding switching device and the direct current power supply. Alternatively, the control circuit is connected in series between the corresponding switching device and the first connection point. The control method further includes: Current detection modules in the two control circuits separately obtain a direction of a current flowing through the corresponding switching device; and when the direction of the current flowing through the corresponding switching device is the first direction and a turn-on period of the corresponding switching device arrives, drive modules in the two control circuits separately control the corresponding switching device to be turned on, where the first direction is a reverse direction of the current flowing through the corresponding switching device when the corresponding switching device is turned on.

It may be understood that, the control circuit is connected in series to the corresponding switching device, so that the resonant converter can detect, through the current detection module in the control circuit, the direction of the current flowing through the corresponding switching device. It may be understood that, when the direction of the current flowing through the corresponding switching device is the first direction, the corresponding switching device meets an implementation condition of soft switching. Further, when the turn-on period of the corresponding switching device arrives, the resonant converter may control the corresponding switching device to be turned on, to implement soft switching. The resonant converter in this embodiment of this application can implement soft switching of two switching devices connected in series.

In an optional implementation, the resonant converter includes the resonant circuit, a plurality of switching devices, and a plurality of control circuits, any two of the plurality of switching devices are connected in series and then connected in parallel to two ends of the direct current power supply, one of the two switching devices is connected to a first end of the direct current power supply, the other of the two switching devices is connected to a second end of the direct current power supply, and the resonant circuit is connected to a first connection point at which the two switching devices are connected in series. The plurality of control circuits are in a one-to-one correspondence with a plurality of switching devices connected to the first end of the direct current power supply, and each of the plurality of control circuits is connected in series between the first end of the direct current power supply and the first connection point. Alternatively, the plurality of control circuits are in a one-to-one correspondence with a plurality of switching devices connected to the second end of the direct current power supply, and each of the plurality of control circuits is connected in series between the second end of the direct current power supply and the first connection point. The control method further includes: The current detection module in each control circuit obtains a direction of a current flowing through the corresponding switching device; and when the direction of the current flowing through the corresponding switching device is the first direction and a turn-on period of the corresponding switching device arrives, the drive module in each control circuit controls the corresponding switching device to be turned on, where the first direction is a reverse direction of the current flowing through the corresponding switching device when the corresponding switching device is turned on.

It may be understood that, the control circuit is connected in series to the corresponding switching device, so that the resonant converter can detect, through the current detection module in the control circuit, the direction of the current flowing through the corresponding switching device. It may be understood that, when the direction of the current flowing through the corresponding switching device is the first direction, the corresponding switching device meets an implementation condition of soft switching. Further, when the turn-on period of the corresponding switching device arrives, the resonant converter may control the corresponding switching device to be turned on, to implement soft switching. In the resonant converter in this embodiment of this application, soft switching of the plurality of switching devices may be separately implemented through the plurality of control circuits.

In an optional implementation, the switching device is connected to the direct current power supply through the first branch, and the switching device is connected to the resonant circuit through the second branch. The current detection module includes a primary coil, a secondary coil, and a direction determining unit, the primary coil is connected in series to the first branch or the second branch, the secondary coil is coupled to the primary coil, and the direction determining unit is electrically connected to the secondary coil. The control method further includes: The secondary coil generates an induced current based on a current flowing through the primary coil; and the direction determining unit determines a direction of the induced current, to obtain the direction of the current flowing through the first branch or the second branch.

It may be understood that, in this embodiment of this application, the primary coil is connected in series to the first branch or the second branch, so that the current detection module can couple, to the secondary coil, the current flowing through the first branch or the second branch, and determine, through the direction determining unit based on the direction of the induced current generated by the secondary coil, the direction of the current flowing through the first branch or the second branch. Because the primary coil is coupled to the secondary coil, different parts of the circuit can be effectively isolated, thereby implementing protection and security functions.

In an optional implementation, the direction determining unit includes a first resistor, a second resistor, and a comparator. The first resistor is connected in parallel to the secondary coil, a first end of the first resistor is connected to a first input of the comparator, a second end of the first resistor is connected to one end of the second resistor, the other end of the second resistor is configured to receive a bias voltage, a second input of the comparator is configured to receive a reference voltage, and an output of the comparator is connected to the drive module. The control method further includes: The comparator outputs a high level to the drive module when a voltage at a target input is greater than the reference voltage, where the target input is the first input of the comparator.

It may be understood that, in this embodiment of this application, when directions of the induced currents generated by the secondary coil of the current detection module flowing through the first resistor are different, in other words, when directions of the currents flowing through the first branch or the second branch are different, voltages at the first input of the comparator are different. In this case, the current detection module may determine, based on a result of comparison between the voltage at the first input of the comparator and the reference voltage, the direction of the current flowing through the first branch or the second branch. In addition, the current detection module enables, based on the bias voltage, the voltage at the first input of the comparator to be greater than 0. This ensures accuracy of the result of comparison between the voltage at the first input of the comparator and the reference voltage.

In an optional implementation, the resonant converter includes the resonant circuit, a plurality of switching devices, and one control circuit, any two of the plurality of switching devices are connected in series and then connected in parallel to two ends of the direct current power supply, and the resonant circuit is connected to a first connection point at which the two switching devices are connected in series. The control circuit is connected in series between the first connection point and the resonant circuit. The control method further includes: The current detection module in the control circuit obtains a direction of a current flowing through one of the two switching devices; and when the direction of the current flowing through the one switching device is the first direction and a turn-on period of the one switching device arrives, the drive module in the control circuit controls the one switching device to be turned on, where the first direction is a reverse direction of the current flowing through the one switching device when the one switching device is turned on.

It may be understood that, in this embodiment of this application, the resonant converter connects the control circuit in series between the resonant circuit and the first connection point, and may detect, through the current detection module in the one control circuit, directions of currents of different switching devices connected to the first connection point. It may be understood that, when the direction of the current flowing through the one switching device is the first direction, the one switching device meets an implementation condition of soft switching. Further, when the turn-on period of the one switching device arrives, the resonant converter may control, through the drive module, the one switching device to be turned on, to implement soft switching. In the resonant converter in this embodiment of this application, soft switching of the plurality of switching devices is implemented through the one control circuit. This can reduce costs.

In an optional implementation, the switching device is connected to the resonant circuit through the second branch. The current detection module includes a primary coil, a secondary coil, and a direction determining unit, the primary coil is connected in series to the second branch, the secondary coil is coupled to the primary coil, and the direction determining unit is electrically connected to the secondary coil. The control method further includes: The secondary coil generates an induced current based on a current flowing through the primary coil; and the direction determining unit determines a direction of the induced current, to obtain the direction of the current flowing through the second branch.

It may be understood that, in this embodiment of this application, the primary coil is connected in series to the second branch, so that the current detection module can couple, to the secondary coil, the current flowing through the second branch, and determine, through the direction determining unit based on the direction of the induced current generated by the secondary coil, the direction of the current flowing through the second branch. Because the primary coil is coupled to the secondary coil, different parts of the circuit can be effectively isolated, thereby implementing protection and security functions.

In an optional implementation, the direction determining unit includes a rectifier and a comparator, an input of the rectifier is connected to the secondary coil, an output of the rectifier is connected to a first input of the comparator, a second input of the comparator is configured to receive a reference voltage, and an output of the comparator is connected to the drive module. The control method further includes: The comparator outputs a high level to the drive module when a voltage at a target input is greater than the reference voltage, where the target input is the first input of the comparator.

It may be understood that, in this embodiment of this application, the current detection module connects the input of the rectifier and the secondary coil, so that the induced current can flow through the rectifier, voltages of different magnitudes are generated at the output of the rectifier, and voltages of different magnitudes are generated at the first input of the comparator. The current detection module may determine, by comparing a magnitude of the voltage at the first input end with a magnitude of the reference voltage, the direction of the current flowing through the second branch.

In an optional implementation, the control method includes: When a turn-off period of the switching device arrives, the drive module controls the switching device to be turned off.

It may be understood that, in this embodiment of this application, when receiving a high level, the drive module may control, based on a drive control signal, the switching device to be turned on and implement self-locking when a turn-on period of the switching device arrives, in other words, when the drive control signal is at the high level, so that the switching device is continuously turned on within the turn-on period. In addition, the drive control module may further control, based on the drive control signal, the switching device to be turned off when a turn-off period of the switching device arrives, in other words, when the drive control signal is at a low level, thereby controlling the switching device to be turned on or off.

## Claims

1. A soft-switch resonant converter, wherein the resonant converter comprises a switching device and a control circuit, the control circuit comprises a current detection module and a drive module, and the current detection module is connected to the switching device;
the current detection module is configured to obtain a direction of a current flowing through the switching device; and
the drive module is configured to: when the direction of the current flowing through the switching device is a first direction and a turn-on period of the switching device arrives, control the switching device to be turned on, wherein the first direction is a reverse direction of the current flowing through the switching device when the switching device is turned on.

2. The resonant converter according to claim 1, wherein the control circuit further comprises a first OR gate, a first input of the first OR gate is connected to an output of the current detection module, a second input of the first OR gate is configured to receive an enable signal, and an output of the first OR gate is connected to the drive module;
the current detection module is configured to: when the direction of the current flowing through the switching device is the first direction, output a high level to the first OR gate;
the first OR gate is configured to output a high level to the drive module when obtaining the high level output by the current detection module or receiving the enable signal; and
the drive module is further configured to: when the high level output by the first OR gate is obtained and the turn-on period of the switching device arrives, control the switching device to be turned on.

3. The resonant converter according to claim 1, wherein the control circuit further comprises a second OR gate, a first input of the second OR gate is connected to an output of the current detection module, a second input of the second OR gate is connected to an output of the drive module, and an output of the second OR gate is connected to an input of the drive module;
the current detection module is configured to: when the direction of the current flowing through the switching device is the first direction, output a high level to the second OR gate;
the second OR gate is configured to: when the high level output to the second OR gate is received or the output of the drive module outputs a high level, output a high level to the drive module; and
the drive module is further configured to: when the high level output by the second OR gate is obtained and the turn-on period of the switching device arrives, control the switching device to be turned on.

4. The resonant converter according to any one of claims 1 to 3, wherein the resonant converter further comprises a resonant circuit, the switching device is connected to a direct current power supply through a first branch, the switching device is connected to the resonant circuit through a second branch, and the current detection module is connected in series to the first branch or the second branch; and
the current detection module is specifically configured to obtain a direction of a current flowing through the first branch or the second branch, to obtain the direction of the current flowing through the switching device.

5. The resonant converter according to any one of claims 1 to 4, wherein the resonant converter comprises the resonant circuit, two control circuits, and two switching devices, the two switching devices are connected in series and then connected in parallel to two ends of the direct current power supply, and the resonant circuit is connected to a first connection point at which the two switching devices are connected in series;
the two switching devices are in a one-to-one correspondence with the two control circuits, and the control circuit is connected in series between the corresponding switching device and the direct current power supply, or the control circuit is connected in series between the corresponding switching device and the first connection point; and
current detection modules in the two control circuits are separately configured to obtain a direction of a current flowing through the corresponding switching device, and drive modules in the two control circuits are separately configured to: when the direction of the current flowing through the corresponding switching device is the first direction and a turn-on period of the corresponding switching device arrives, control the corresponding switching device to be turned on, wherein the first direction is a reverse direction of the current flowing through the corresponding switching device when the corresponding switching device is turned on.

6. The resonant converter according to any one of claims 1 to 4, wherein the resonant converter comprises the resonant circuit, a plurality of switching devices, and a plurality of control circuits, any two of the plurality of switching devices are connected in series and then connected in parallel to two ends of the direct current power supply, one of the two switching devices is connected to a first end of the direct current power supply, the other of the two switching devices is connected to a second end of the direct current power supply, and the resonant circuit is connected to a first connection point at which the two switching devices are connected in series;
the plurality of control circuits are in a one-to-one correspondence with a plurality of switching devices connected to the first end of the direct current power supply, and each of the plurality of control circuits is connected in series between the first end of the direct current power supply and the first connection point; or the plurality of control circuits are in a one-to-one correspondence with a plurality of switching devices connected to the second end of the direct current power supply, and each of the plurality of control circuits is connected in series between the second end of the direct current power supply and the first connection point; and
a current detection module in each control circuit is configured to obtain a direction of a current flowing through a corresponding switching device, and a drive module in each control circuit is configured to: when the direction of the current flowing through the corresponding switching device is the first direction and a turn-on period of the corresponding switching device arrives, control the corresponding switching device to be turned on, wherein the first direction is a reverse direction of the current flowing through the corresponding switching device when the corresponding switching device is turned on.

7. The resonant converter according to claim 5 or 6, wherein the switching device is connected to the direct current power supply through the first branch, and the switching device is connected to the resonant circuit through the second branch; and the current detection module comprises a primary coil, a secondary coil, and a direction determining unit, the primary coil is connected in series to the first branch or the second branch, the secondary coil is coupled to the primary coil, and the direction determining unit is electrically connected to the secondary coil;
the secondary coil is configured to generate an induced current based on a current flowing through the primary coil; and
the direction determining unit is configured to determine a direction of the induced current, to obtain the direction of the current flowing through the first branch or the second branch.

8. The resonant converter according to claim 7, wherein the direction determining unit comprises a first resistor, a second resistor, and a comparator, the first resistor is connected in parallel to the secondary coil, a first end of the first resistor is connected to a first input of the comparator, a second end of the first resistor is connected to one end of the second resistor, the other end of the second resistor is configured to receive a bias voltage, a second input of the comparator is configured to receive a reference voltage, and an output of the comparator is connected to the drive module; and
the comparator is configured to: when a voltage at a target input is greater than the reference voltage, output a high level to the drive module, wherein the target input is the first input of the comparator.

9. The resonant converter according to any one of claims 1 to 4, wherein the resonant converter comprises the resonant circuit, a plurality of switching devices, and one control circuit, any two of the plurality of switching devices are connected in series and then connected in parallel to two ends of the direct current power supply, and the resonant circuit is connected to a first connection point at which the two switching devices are connected in series; and
the control circuit is connected in series between the first connection point and the resonant circuit, a current detection module in the control circuit is configured to obtain a direction of a current flowing through one of the two switching devices, and a drive module in the control circuit is configured to: when the direction of the current flowing through the one switching device is the first direction and a turn-on period of the one switching device arrives, control the one switching device to be turned on, wherein the first direction is a reverse direction of the current flowing through the one switching device when the one switching device is turned on.

10. The resonant converter according to claim 9, wherein the switching device is connected to the resonant circuit through the second branch; and the current detection module comprises a primary coil, a secondary coil, and a direction determining unit, the primary coil is connected in series to the second branch, the secondary coil is coupled to the primary coil, and the direction determining unit is electrically connected to the secondary coil;
the secondary coil is configured to generate an induced current based on a current flowing through the primary coil; and
the direction determining unit is configured to determine a direction of the induced current, to obtain the direction of the current flowing through the second branch.

11. The resonant converter according to claim 10, wherein the direction determining unit comprises a rectifier and a comparator, an input of the rectifier is connected to the secondary coil, an output of the rectifier is connected to a first input of the comparator, a second input of the comparator is configured to receive a reference voltage, and an output of the comparator is connected to the drive module; and
the comparator is configured to: when a voltage at a target input is greater than the reference voltage, output a high level to the drive module, wherein the target input is the first input of the comparator.

12. A resonant converter control method, wherein the control method is applied to a control circuit, the control circuit comprises a current detection module and a drive module, the current detection module is configured to connect to a switching device, and the control method comprises:
obtaining, by the current detection module, a direction of a current flowing through the switching device; and
when the direction of the current flowing through the switching device is a first direction and a turn-on period of the switching device arrives, controlling, by the drive module, the switching device to be turned on, wherein the first direction is a reverse direction of the current flowing through the switching device when the switching device is turned on.

13. The control method according to claim 12, wherein the control circuit further comprises a first OR gate, a first input of the first OR gate is connected to an output of the current detection module, a second input of the first OR gate is configured to receive an enable signal, an output of the first OR gate is connected to the drive module, and the control method further comprises:
when the direction of the current flowing through the switching device is the first direction, outputting, by the current detection module, a high level to the first OR gate; and
outputting, by the first OR gate, a high level to the drive module when obtaining the high level output by the current detection module or receiving the enable signal; and
the controlling, by the drive module when the direction of the current flowing through the switching device is a first direction and a turn-on period of the switching device arrives, the switching device to be turned on comprises:
when the high level output by the first OR gate is obtained and the turn-on period of the switching device arrives, controlling, by the drive module, the switching device to be turned on.

14. The control method according to claim 12, wherein the control circuit further comprises a second OR gate, a first input of the second OR gate is connected to an output of the current detection module, a second input of the second OR gate is connected to an output of the drive module, an output of the second OR gate is connected to an input of the drive module, and the control method further comprises:
when the direction of the current flowing through the switching device is the first direction, outputting, by the current detection module, a high level to the second OR gate; and
when the high level output to the second OR gate is received or the output of the drive module outputs a high level, outputting, by the second OR gate, a high level to the drive module; and
the controlling, by the drive module when the direction of the current flowing through the switching device is a first direction and a turn-on period of the switching device arrives, the switching device to be turned on comprises:
when the high level output by the second OR gate is obtained and the turn-on period of the switching device arrives, controlling, by the drive module, the switching device to be turned on.
